# EUROPEAN PATENT APPLICATION

(11) **EP 2 492 542 A2**
(43) Date of publication of application: **29.08.2012**
(21) Application number: 12156884.4
(22) Date of filing: 24.02.2012
(51) Int. Cl.: F16H 3/72

(54) **Clutch device structured with controllable epicycle gear set and applied power train thereof**

(30) Priority: 24.02.2011 US 201113033744; 11.03.2011 US 201113045636; 11.03.2011 US 201113045675
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention relates to a clutch device structured with controllable epicycle gear set and applied power train thereof, wherein the epicycle gear set (EG101) is driven by a rotary kinetic energy source and combined with a controllable brake device; through controlling the controllable brake device to perform brake locking or releasing, the operations of transmission function of combining transmission or releasing between a rotation shaft (S101) at an output/input end, a rotation shaft (S102) at an output/input end and a sleeve type rotation shaft (AS101) of the epicycle gear set (EG101) are enabled to be controlled;

The present invention is further through an epicycle gear set (EG101) and a controllable brake device to structure the clutch function, so as to replace the conventional friction type electromagnetic clutch device, and combined with two or more than two of one or more than one types of rotary kinetic power sources to constitute a clutch device structured with controllable epicycle gear set and applied power train thereof.

## Description

### BACKGROUND OF THE INVENTION

### (a) Field of the Invention

The present invention relates to a clutch device structured with controllable epicycle gear set and applied power train thereof, wherein the epicycle gear set (EG101) is driven by a rotary kinetic energy source and combined with a controllable brake device; through controlling the controllable brake device to perform brake locking or releasing, the operations of transmission function of combining transmission or releasing between a rotation shaft (S101) at an output/input end, a rotation shaft (S102) at an output/input end and a sleeve type rotation shaft (AS101) ofthe epicycle gear set (EG101) are enabled to be controlled;

The present invention is further through an epicycle gear set (EG101) and a controllable brake device to structure the clutch function, so as to replace the conventional friction type electromagnetic clutch device, and combined with two or more than two of one or more than one types of rotary kinetic power sources to constitute a clutch device structured with controllable epicycle gear set and applied power train thereof.

### (b) Description of the Prior Art

Conventionally a friction type electromagnetic clutch device is often installed between the output/input end of a rotary kinetic energy source and a load; and through electrically charging or breaking the friction type electromagnetic clutch device to perform operations of combining or releasing, the rotary kinetic energy source and the load are enabled to be engaged or released. One primary disadvantage of the conventional arts is that the friction type electromagnetic clutch device is often remained with residual rotary torque during the releasing, which may cause the kinetic energy loss and the ineffective operation; and a friction type electromagnetic clutch device is often installed between conventional automatic or semi-automatic power trains or hybrid power trains for performing engagement or disengagement, so that the power train is enabled to perform various functional operations; however, when the friction type electromagnetic clutch device is in a disengaged state, residual torque may remain, and thereby to cause power loss and system malfunction.

### SUMMARY OF THE INVENTION

The present invention provides a clutch device structured with controllable epicycle gear set and the applied power train thereof, wherein a rotation shaft (S101) combined with an input wheel (W101) of an epicycle gear set (EG101) is served as an output/input end, and a rotation shaft (S102) combined with an output wheel (W102) is served as an output/input end, and a rocker arm (A101) and a sleeve type rotation shaft (AS101) linked by the epicycle wheels (W103) are served as an output/input end, so that a part or all of the three output/input ends are respectively combined to one action side of a corresponding controllable brake device, and the other action side of the controllable brake device is connected to a housing (H100); through controlling the controllable brake device to perform brake locking or releasing, the operations of transmission function of combining transmission or releasing between the rotation shaft (S101) at the output/input end, the rotation shaft (S102) at the output/input end and the sleeve type rotation shaft (AS101) of the epicycle gear set (EG101) are enabled to be controlled;

The present invention of clutch device structured with controllable epicycle gear set and applied power train thereof further by using the controllable brake device to manipulate an epicycle gear set (EG101), in which the power train having the clutch device structured by using the controllable brake device to manipulate the epicycle gear set (EG101) can be widely applied in a dual rotary kinetic power source or a triple rotary kinetic power source, the structural configuration includes a coaxial in-series structure or a multiple axial in-parallel structure for satisfying the requirement of applied space.

According to a second aspect of the present invention, a clutch device comprises: a first rotation shaft (S101); a second rotation shaft (S102); an epicycle gear set (EG101) disposed between the first rotation shaft (S101) and the second rotation shaft (S102) so that the first rotation shaft (S101) forms a first output/input end and the second rotation shaft (S102) forms a second output/input end; and a brake device controllable to operate between a brake locked configuration and a brake released configuration whereby operation of the brake has the effect of operating the device as a clutch device.

In this way, a conventional friction clutch can be replaced by the clutch device of the present invention.

In some embodiments of the invention, more than one brake device is included in the clutch device. The brake device or devices might be located in a number of positions within the clutch device. The controllable brake device performs brake locking and releasing operations.

### BRIEF DESCRIPTION OF THE DRAWINGS

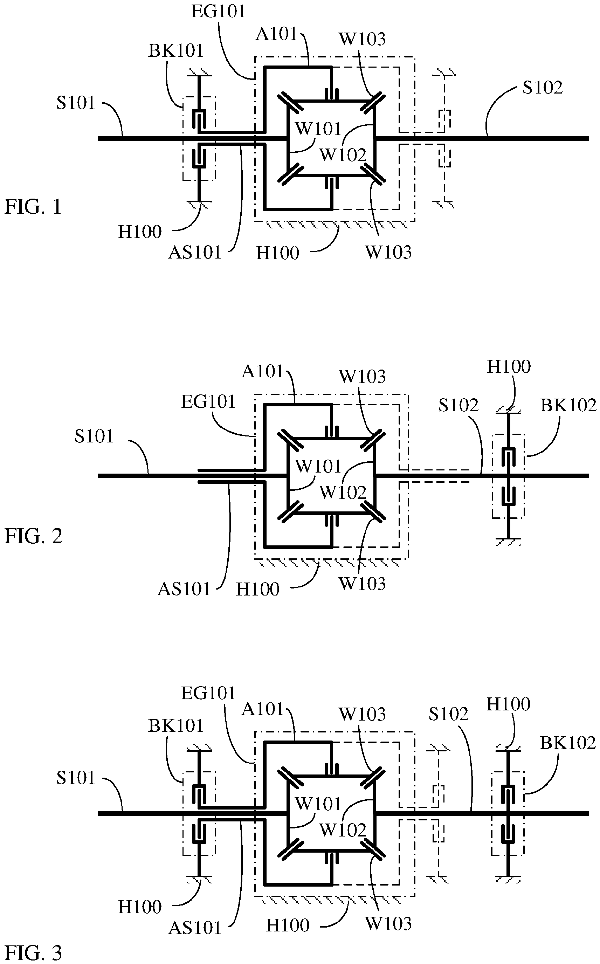

FIG 1 is a schematic structural view showing the input wheel (W101) and the rotation shaft (S101) of the epicycle gear set (EG101) being served as an output/input end, the output wheel (W102) and the rotation shaft (S102) being served as an output/input end, the rocker arm (A101) and the sleeve type rotation shaft (AS101) linked by the epicycle wheels (W103) being sleeved on the rotation shaft (S101) or the rotation shaft (S102), and the controllable brake device (BK101) being fastened in the housing (H100) through the rocker arm (A101) and the sleeve type rotation shaft (AS101), according to one embodiment of the present invention.
FIG.2 is a schematic structural view showing the rocker arm (A101) and the sleeve type rotation shaft (AS101) linked by the epicycle wheels (W103) being served as an output/input end, and coaxially sleeved with the rotation shaft (S101) or the rotation shaft (S102), and the controllable brake device (BK102) being combined and fastened in the housing (H100) through the rotation shaft (S102), according to one embodiment of the present invention.
FIG. 3 is a schematic structural view showing the rotation shaft (S102) serving to provide the output function as shown in FIG. 1 being further installed with a controllable brake device (BK102) capable of preventing reverse linkage.

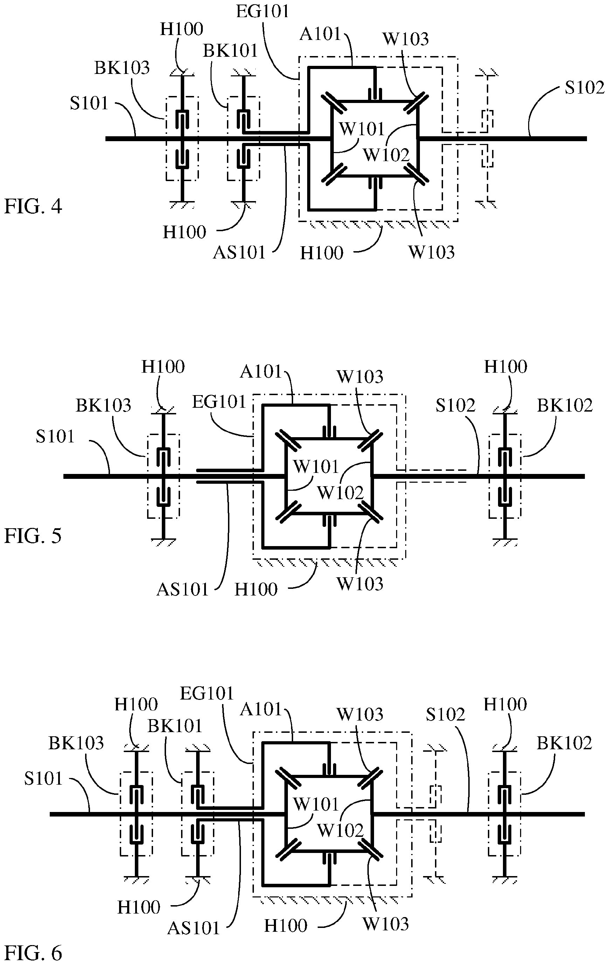

FIG. 4 is a schematic structural view showing the rotation shaft (S101) as shown in FIG. 1 being further installed with a controllable brake device (BK103).
FIG. 5 is a schematic structural view showing the rotation shaft (S101) as shown in FIG. 2 being further installed with a controllable brake device (BK103).
FIG. 6 is a schematic structural view showing the rotation shaft (S101) as shown in FIG. 3 being further installed with a controllable brake device (BK103).

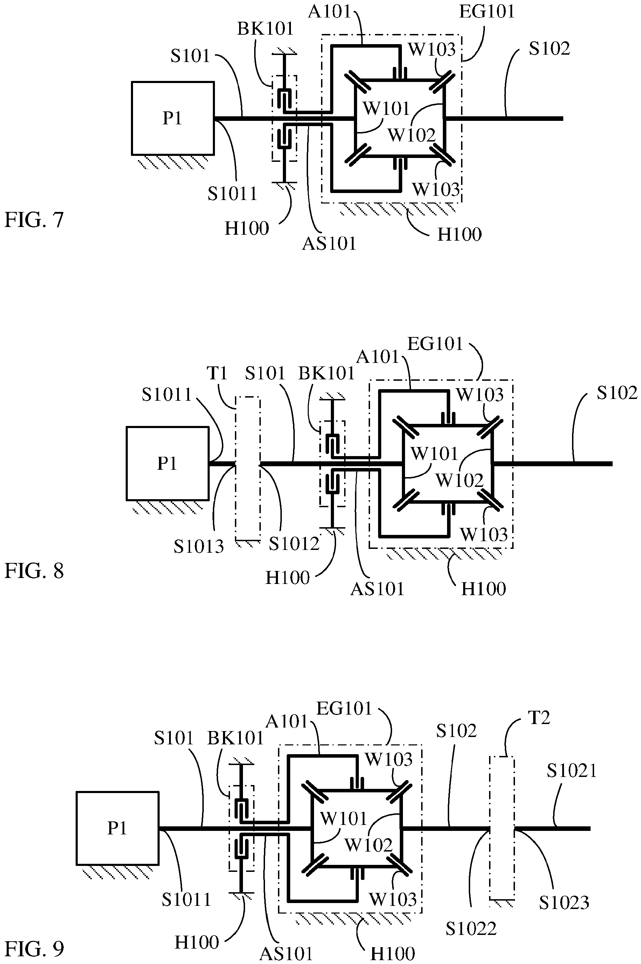

FIG. 7 is a schematic structural view showing the output end of a first rotary kinetic power source (P1) being combined with a rotation shaft (S101) combined with an input wheel (W101) of an epicycle gear set (EG101), and a rocker arm (A101) or a sleeve type rotation shaft (AS101) driven by an epicyclic wheel (W103) of the epicycle gear set (EG101) being connected to an action side of a controllable brake device (BK101) while the other action side of the controllable brake device (BK101) being fixed in a housing (H100).
FIG. 8 is a schematic view showing the structure shown in FIG. 7 wherein a first transmission device (T1) being installed between the first rotary kinetic power source (P1) and the rotation shaft (S101) driven by the input wheel (W101) of the epicycle gear set (EG101), according to one embodiment of the present invention.
FIG. 9 is a schematic view showing the structure shown in FIG. 7 wherein the output wheel (W102) of the epicycle gear set (EG101) and the output/input end of the rotation shaft (S102) being installed with a second transmission device (T2) and an output/input end rotation shaft (S1021), according to one embodiment of the present invention.

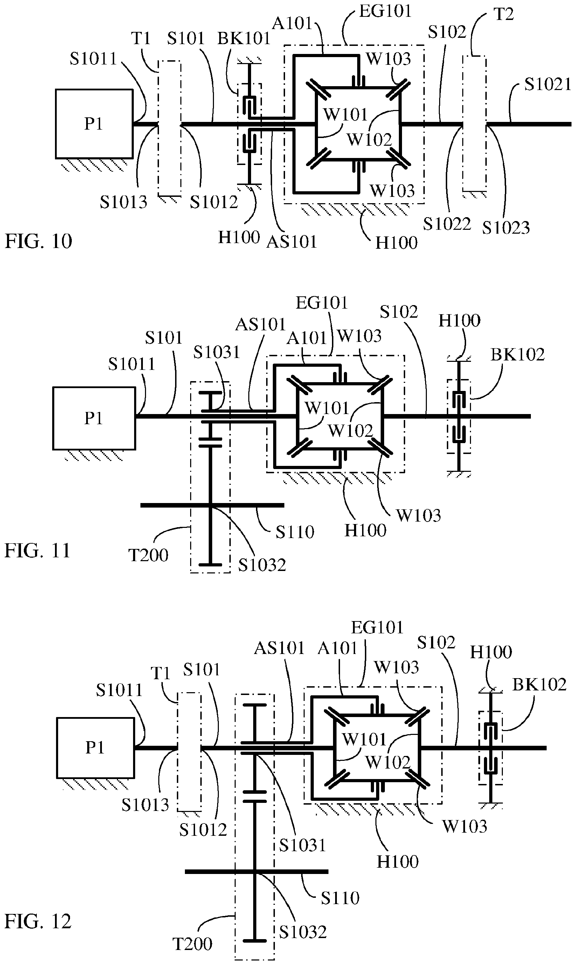

FIG. 10 is a schematic view showing the structure shown in FIG. 7 wherein the first transmission device (T1) being installed between the first rotary kinetic power source (P1) and the rotations shaft (S101) driven by the input wheel (W101) ofthe epicycle gear set (EG101), and the output wheel (W102) of the epicycle gear set (EG101) and the output/input end of the rotation shaft (S102) being installed with the second transmission device (T2) and the output/input end rotation shaft (S1021), according to one embodiment of the present invention.
FIG. 11 is a schematic structural view showing the rotation shaft (S102) combined with the first rotary kinetic power source (P1) and the transmission unit (T200) and the epicycle gear set (EG101) and the output wheel (W102) of the epicycle gear set (EG101) being combined at an action side of a controllable brake device (BK102), and the other action side of the controllable brake device (BK102) is fixed in the housing (H100), and the rocker arm (A101) or the sleeve type rotation shaft (AS101) driven by the epicyclic wheel (W103) of the epicycle gear set (EG101) being combined with the an input end rotation shaft (S1031) of the transmission unit (T200), and the output end of the transmission unit (T200) being installed with a rotation shaft (S110), according to one embodiment of the present invention.
FIG. 12 is a schematic view showing the structure shown in FIG. 11 wherein the first transmission device (T1) being installed between the rotation shaft (S101) combined with the input wheel (W101) of the epicycle gear set (EG101) and the first rotary kinetic power source (P1), according to one embodiment of the present invention.

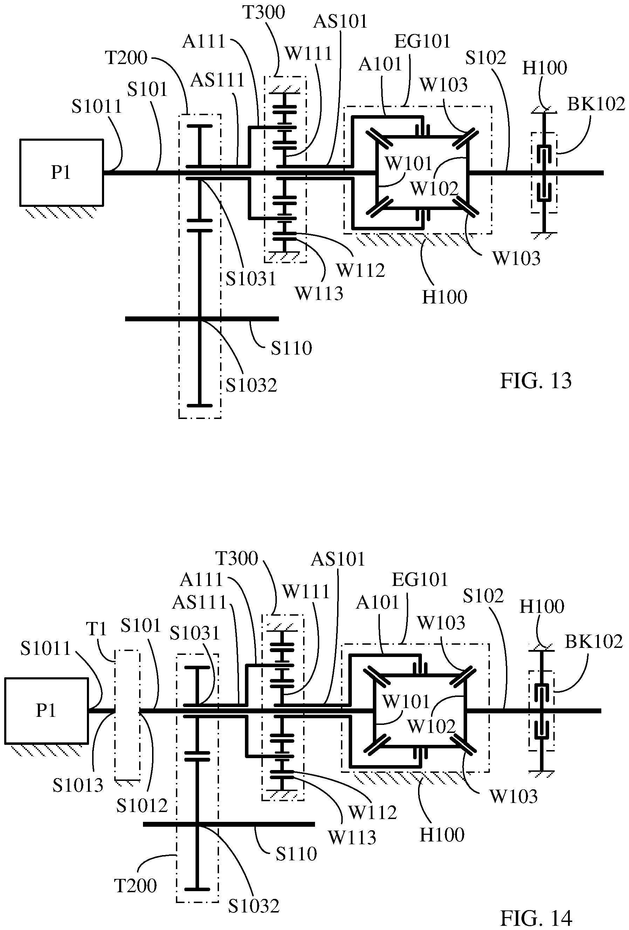

FIG. 13 is a schematic view showing the structure shown in FIG. 11 wherein a planetary gear set (T300) being installed between the input end rotation shaft (S1031) of the transmission unit (T200) and the rocker arm (A101) or the sleeve type rotation shaft (AS101) driven by the epicyclic wheel (W103) of the epicycle gear set (EG101), according to one embodiment of the present invention.
FIG. 14 is a schematic view showing the structure shown in FIG. 11 wherein the first transmission device (T1) being installed between the rotation shaft (S101) combined with the input wheel (W101) of the epicycle gear set (EG101) and the first rotary kinetic power source (P1), and the planetary gear set (T300) being installed between the input end rotation shaft (S1031) of the transmission unit (T200) and the rocker arm (A101) or the sleeve type rotation shaft (AS101) driven by the epicyclic wheel (W103) of the epicycle gear set (EG101), according to one embodiment of the present invention.

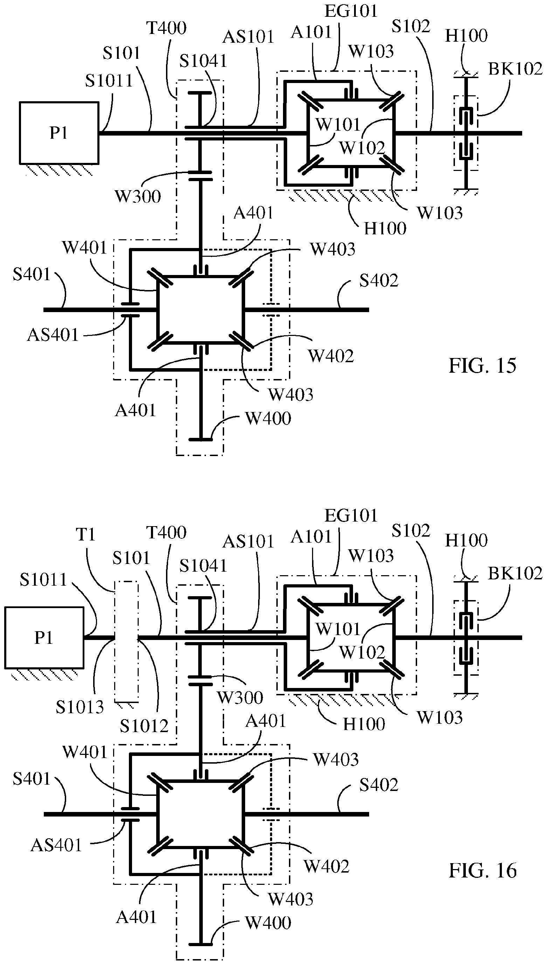

FIG. 15 is a schematic view showing the structure shown in FIG. 11 wherein the transmission unit (T200) being replaced by a differential output epicycle gear set (T400), according to one embodiment of the present invention.
FIG. 16 is a schematic structural view showing the transmission unit (T200) shown in FIG. 12 being replaced by the differential output epicycle gear set (T400), according to one embodiment of the present invention.

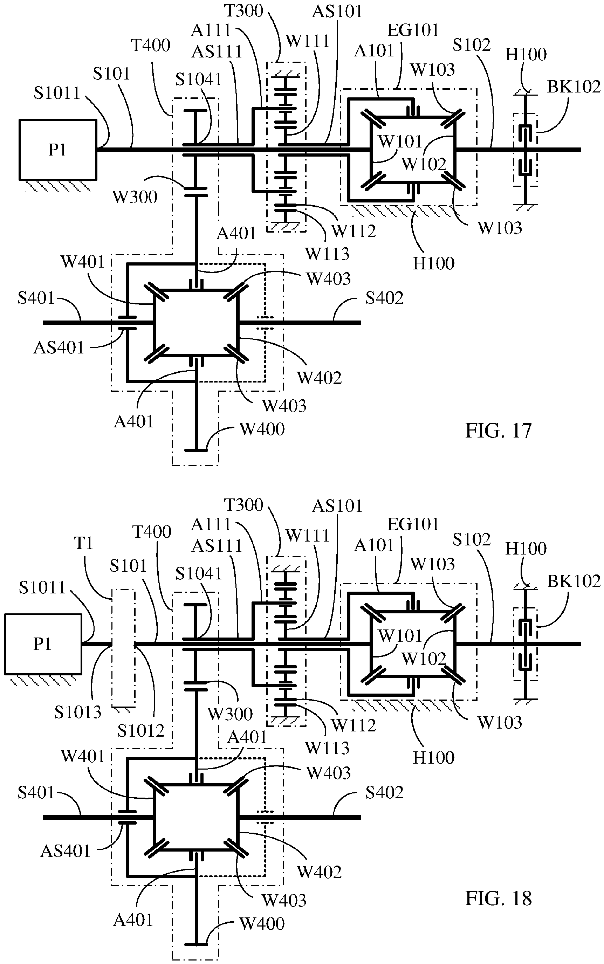

FIG. 17 is a schematic structural view showing the transmission unit (T200) shown in FIG. 13 being replaced by the differential output epicycle gear set (T400), according to one embodiment of the present invention.
FIG. 18 is a schematic structural view showing the transmission unit (T200) shown in FIG. 14 being replaced by the differential output epicycle gear set (T400), according to one embodiment of the present invention.

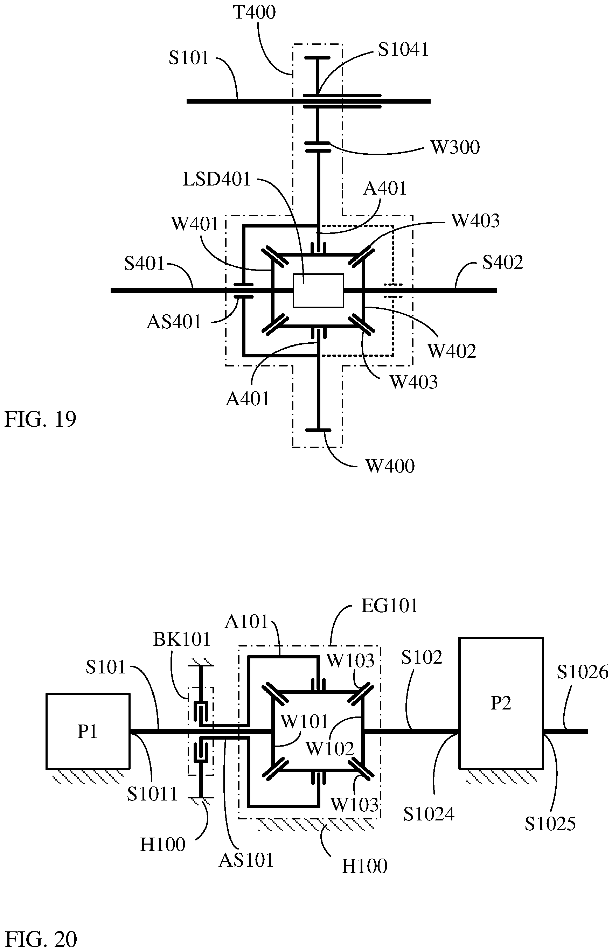

FIG. 19 is a schematic structural view showing a limited slip differential device (LSD401) being installed between the output/input wheel (W401) and the output/input wheel (W402) of the differential output epicycle gear set (T400), according to one embodiment of the present invention.
FIG. 20 is a schematic structural view showing a rocker arm (A101) and a sleeve type rotation shaft (AS101) driven by a first rotary kinetic power source (P1) and an epicyclic wheel (W103) of an epicycle gear set (EG101) being combined with a controllable brake device (BK101), and an input wheel (W102) of the epicycle gear set (EG101) and an output/input end of a rotation shaft (S102) being combined with a second rotary kinetic power source (P2) and an output/input end rotation shaft (S1026), according to one embodiment of the present invention.

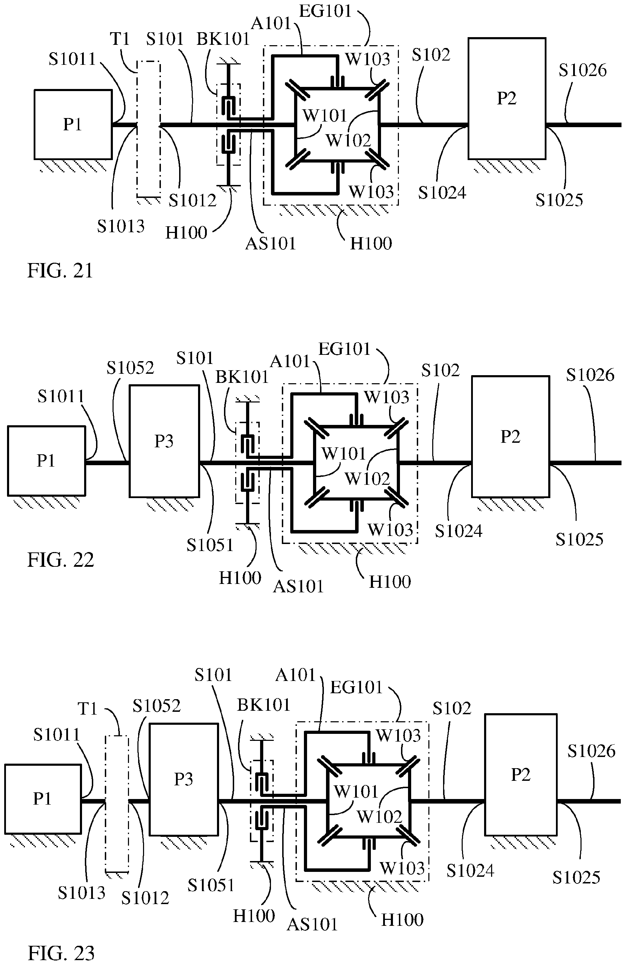

FIG. 21 is a schematic view showing a first transmission device (T1) being installed between the first rotary kinetic power source (P1) and the controllable brake device (BK101), and the input wheel (W102) of the epicycle gear set (EG101) and the output/input end of the rotation shaft (S102) being combined with the second rotary kinetic power source (P2) and the output/input end rotation shaft (S1026) shown in FIG. 20, according to one embodiment of the present invention.
FIG. 22 is a schematic view showing a third rotary kinetic power source (P3) being installed between the first rotary kinetic power source (P I) and the controllable brake device (BK101) shown in FIG. 20, according to one embodiment of the present invention.
FIG. 23 is a schematic view showing a third rotary kinetic power source (P3) being installed between the first transmission device (T1) and the controllable brake device (BK101) shown in FIG. 21, according to one embodiment of the present invention.

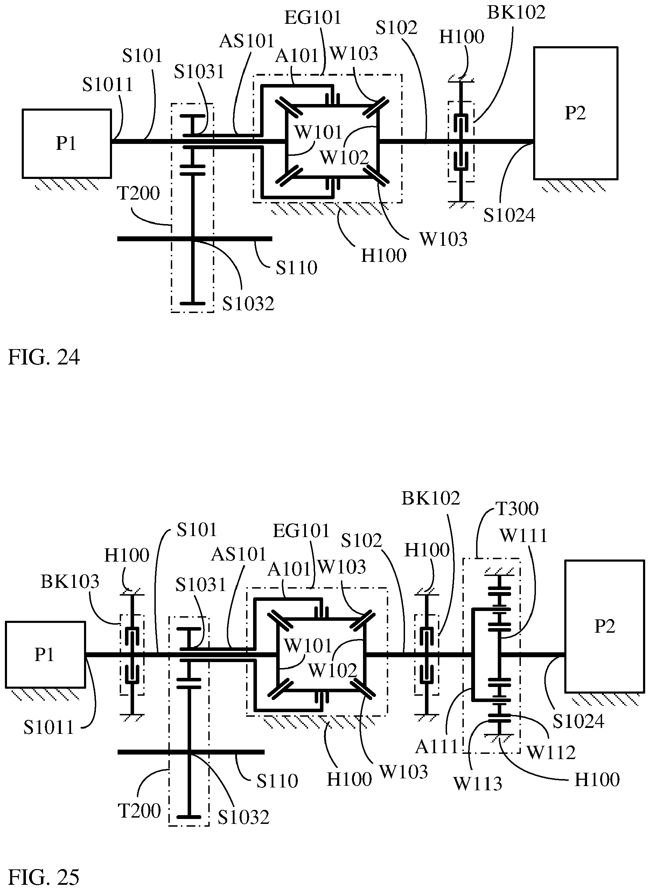

FIG. 24 is a schematic structural view showing the present invention being structured by the first rotary kinetic power source (P1) and a transmission unit (T200) and the epicycle gear set (EG101) and a controllable brake device (BK102), and the output wheel (W102) of the epicycle gear set (EG101) and the output/input end of the rotation shaft (S102) being combined with the second rotary kinetic power source (P2), the epicyclic wheel (W103) of the epicycle gear set (EG101) being provided for driving the rocker arm (A101) and the sleeve type rotation shaft (AS101), and the sleeve type rotation shaft (AS101) being provided for driving the output/input end rotation shaft (S1031) of the transmission unit (T200), and the other output/input end rotation shaft (S1032) of the transmission unit (T200) being installed with a rotation shaft (S110), according to one embodiment of the present invention.
FIG. 25 is a schematic view showing the structure in FIG. 24 in which the input wheel (W101) of the epicycle gear set (EG101) being combined with the rotation shaft (S101) and combined with the rotation shaft (S1011) of the first rotary kinetic power source (P1), the rotation shaft (S101) being combined to an action side of a controllable brake device (BK103), and the other action end of the controllable brake device (BK103) being fixed in the housing (H100), a planetary gear set (300) being installed between the rotation shaft (S102) combined with the output wheel (W102) of the epicycle gear set (EG101) and the second rotary kinetic power source (P2), the output/input end of the rotation shaft (S102) combined with the output wheel (W102) of the epicycle gear set (EG101) being combined with a rocker arm (A111) of a planetary gear set (T300), an outer annular wheel (W113) of the planetary gear set (T300) being fixed in the housing (H100), a sun wheel (W111) of the planetary gear set (T300) being combined with the second rotary kinetic power source (P2), the epicyclic wheel (W103) of the epicycle gear set (EG101) being provided for driving the rocker arm (A101) and the sleeve type rotation shaft (AS101), and the sleeve type rotation shaft (AS101) being provided for driving the output/input end rotation shaft (S1031) of the transmission unit (T200), according to one embodiment of the present invention.

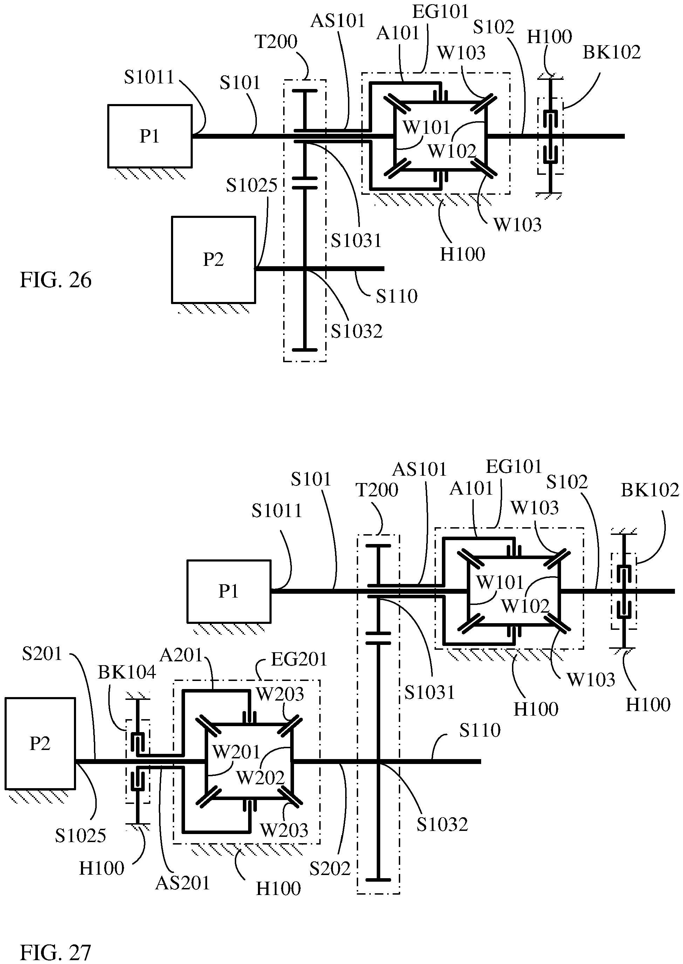

FIG. 26 is a schematic view showing the second rotary kinetic power source (P2) shown in FIG. 24 being installed at one end of the output/input end rotation shaft (S110) of the transmission unit (T200).
FIG. 27 is a schematic view showing the structure shown in FIG. 26 in which an epicycle gear set (EG201) and a controllable brake device (BK104) being installed between one end of the output/input end rotation shaft (S110) of the transmission unit (T200) and the second rotary kinetic power source (P2).

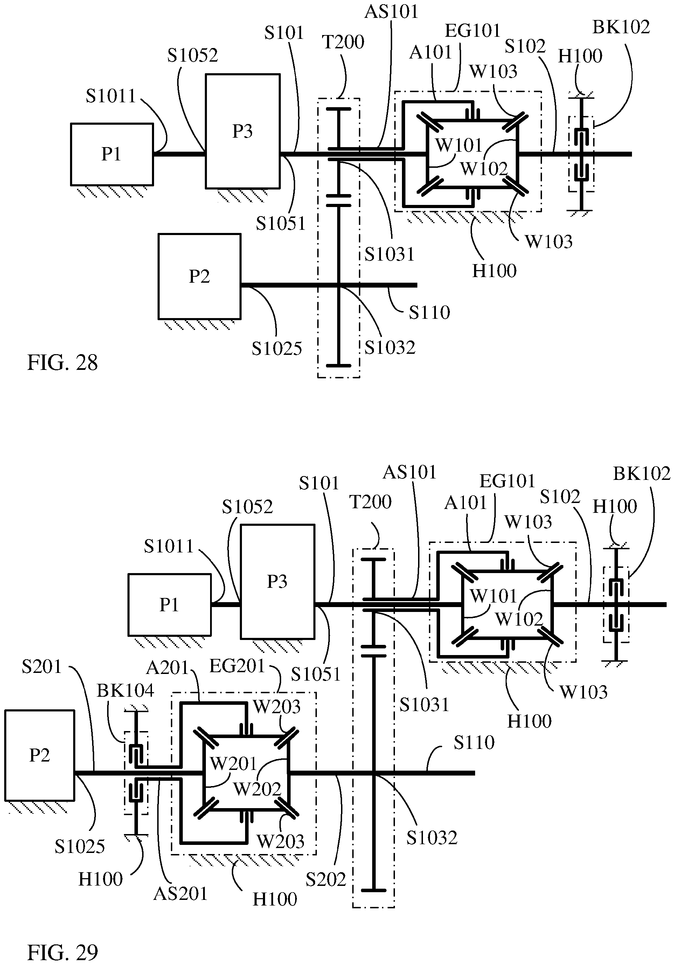

FIG. 28 is a schematic view showing the structure shown in FIG. 26 in which the third rotary kinetic power source (P3) being installed between the first rotary kinetic power source (P1) and the rotation shaft (S101) combined with the input wheel (W101) of the epicycle gear set (EG101).
FIG. 29 is a schematic view showing the structure shown in FIG. 28 in which the epicycle gear set (EG201) and the controllable brake device (BK104) being installed between one end of the output/input end rotation shaft (S110) of the transmission unit (T200) and the second rotary kinetic power source (P2).

### DESCRIPTION OF MAIN COMPONENT SYMBOLS

A101, A111, A201,A401: Rocker arm
AS101, AS111, AS201, AS401: Sleeve type rotation shaft
BK101, BK102, BK103, BK104: Controllable brake device
EG101, EG201: Epicycle gear set
H100: Housing
LSD401: Limited slip differential device
P1: First rotary kinetic power source
P2: Second rotary kinetic power source
P3: Third rotary kinetic power source
S101, S102, S110, S201, S202, S1011, S1012, S1013, S1021, S1022, S1023, S1024,
S1025, S1026, S1031, S1032, S1041, S1051, S1052: Rotation shaft
S401, S402: Differential output/input end rotation shaft
T1: First transmission device
T2: Second transmission device
T200: Transmission unit
T300: Planetary gear set
T400: Differential output epicycle gear set
W101, W201: Input wheel
W102, W202: Output wheel
W103, W203, W403: Epicycle wheel
W300: Transmission wheel
W400: Annular input wheel
W401, W402: Output/input wheel
W111: Sun wheel
W112: Planetary wheel
W113: Outer annular wheel

### DETAILED DESCRIPTION OF THE PREFERRED EMBODIMENTS

Conventionally a friction type electromagnetic clutch device is often installed between the output/input end of a rotary kinetic energy source and a load; and through electrically charging or breaking the friction type electromagnetic clutch device to perform operations of combining or releasing, the rotary kinetic energy source and the load are enabled to be engaged or released. One primary disadvantage of the conventional arts is that the friction type electromagnetic clutch device is often remained with residual rotary torque during the releasing, which may cause the kinetic energy loss and the ineffective operation; and a friction type electromagnetic clutch device is often installed between conventional automatic or semi-automatic power trains or hybrid power trains for performing engagement or disengagement, so that the power train is enabled to perform various functional operations; however, when the friction type electromagnetic clutch device is in a disengaged state, residual torque may remain, and thereby to cause power loss and system malfunction.

The present invention provides a clutch device structured with controllable epicycle gear set and the applied power train thereof, wherein a rotation shaft (S101) combined with an input wheel (W101) of an epicycle gear set (EG101) is served as an output/input end, and a rotation shaft (S102) combined with an output wheel (W102) is served as an output/input end, and a rocker arm (A101) and a sleeve type rotation shaft (AS101) linked by the epicycle wheels (W103) are served as an output/input end, so that a part or all of the three output/input ends are respectively combined to one action side of a corresponding controllable brake device, and the other action side of the controllable brake device is connected to a housing (H100); through controlling the controllable brake device to perform brake locking or releasing, the operations of transmission function of combining transmission or releasing between the rotation shaft (S101) at the output/input end, the rotation shaft (S102) at the output/input end and the sleeve type rotation shaft (AS101) of the epicycle gear set (EG101) are enabled to be controlled;

The present invention of clutch device structured with controllable epicycle gear set and applied power train thereof further by using the controllable brake device to manipulate an epicycle gear set (EG101), in which the power train having the clutch device structured by using the controllable brake device to manipulate the epicycle gear set (EG101) can be widely applied in a dual rotary kinetic power source or a triple rotary kinetic power source, the structural configuration includes a coaxial in-series structure or a multiple axial in-parallel structure for satisfying the requirement of applied space.

The structure application of a clutch device structured with controllable epicycle gear set and the applied power train thereof of present invention is disclosed as following:

FIG. 1 is a schematic structural view showing the input wheel (W101) and the rotation shaft (S101) of the epicycle gear set (EG101) being served as an output/input end, the output wheel (W102) and the rotation shaft (S102) being served as an output/input end, the epicycle wheels (W103) and the rocker arm (A101) and the sleeve type rotation shaft (AS101) linked by the epicycle wheels (W103) being sleeved on the rotation shaft (S101) or the rotation shaft (S102), and through the rocker arm (A101) or the sleeve type rotation shaft (AS101) connecting to the controllable brake device (BK101) fastened in the housing (H100), according to one embodiment of the present invention.

As show in FIG 1, it mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--The shell of the epicycle gear set (EG101) is also installed in the housing (H100), and the output wheel (W102) of the epicycle gear set (EG101) is served to drive the rotation shaft (S102);

A clutch device structured with controllable epicycle gear set and the applied power train thereof as shown in FIG. 1 is through controlling the controllable brake device (BK101) to perform brake locking or releasing, so as to enable the operation of clutch function between the rotation shaft (S101) and the rotation shaft (S102).

FIG.2 is a schematic structural view showing the rocker arm (A101) and the sleeve type rotation shaft (AS101) linked by the epicycle wheels (W103) being served as an output/input end, and coaxially sleeved with the rotation shaft (S101) or the rotation shaft (S102), and the controllable brake device (BK102) being combined and fastened in the housing (H100) through the rotation shaft (S102), according to one embodiment of the present invention.

As show in FIG 2, it mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--The shell of the epicycle gear set (EG101) is also installed in the housing (H100), and the output wheel (W102) of the epicycle gear set (EG101) is served to drive the rotation shaft (S102);

A clutch device structured with controllable epicycle gear set and the applied power train thereof as shown in FIG. 2 is through controlling the controllable brake device (BK102) to perform brake locking or releasing, so as to enable the operation of clutch function between the rotation shaft (S101) and the sleeve type rotation shaft (AS101).

FIG. 3 is a schematic structural view showing the rotation shaft (S102) serving to provide the output function as shown in FIG. 1 being further installed with a controllable brake device (BK102) capable of preventing reverse linkage.

As show in FIG 3, it mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--The shell of the epicycle gear set (EG101) is also installed in the housing (H100), and the output wheel (W102) of the epicycle gear set (EG101) is served to drive the rotation shaft (S102);

A clutch device structured with controllable epicycle gear set and the applied power train thereof as shown in FIG. 3 is through controlling the controllable brake device (BK101) and the controllable brake device (BK102) to generate one or more than one operation functions as following:
1. When the controllable brake device (BK101) is in a brake locking state, and the controllable brake device (BK102) is in a releasing state, the transmission relation between the rotation shaft (S101) and the rotation shaft (S102) is in a connecting relation allowing for transmission;
2. When the controllable brake device (BK101) is in the releasing state, and the controllable brake device (BK102) is in the brake locking state, the transmission relation between the rotation shaft (S101) and the sleeve type rotation shaft (AS101) is in a connecting relation allowing for transmission;
3. When the controllable brake device (BK101) and the controllable brake device (BK102) are both in the brake locking state, the rotation shaft (S101) and the rotation shaft (S102) and the sleeve type rotation shaft (AS101) are all connected in the brake locking state, thus not capable of mutually driving;
4. When the controllable brake device (BK101) and the controllable brake device (BK102) are both in the releasing state, the transmission relation between the rotation shaft (S101) and the rotation shaft (S102) and the sleeve type rotation shaft (AS101) is in a releasing relation allowing idle rotation;

According to a clutch device structured with controllable epicycle gear set and the applied power train thereof of present invention, the rotation shaft (S101) can be further installed with a controllable brake device (BK103) for increasing the controllable operation function, the disclosure is as following:

FIG. 4 is a schematic structural view showing the rotation shaft (S101) being further installed with a controllable brake device (BK103) according to the embodiment shown in FIG. 1.

As shown in FIG. 4, the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rocker arm (A101) or the sleeve type rotation shaft (AS101) connects to the controllable brake device (BK101) fastened in the housing (H100), and through the rotation shaft (S101) connects to the controllable brake device (BK103) fastened in the housing (H100), and it mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100);
--The shell of the epicycle gear set (EG101) is also installed in the housing (H100), and the output wheel (W102) of the epicycle gear set (EG101) is served to drive the rotation shaft (S102);

A clutch device structured with controllable epicycle gear set and am applied power train thereof as shown in FIG. 4 is through controlling the controllable brake device (BK101) and the controllable brake device (BK103) to generate one or more than one operation functions as following:
1. When the controllable brake device (BK101) is in a brake locking state, and the controllable brake device (BK103) is in a releasing state, the transmission relation between the rotation shaft (S101) and the rotation shaft (S102) is in a connecting relation allowing for transmission;
2. When the controllable brake device (BK101) is in the releasing state, and the controllable brake device (BK103) is in the brake locking state, the transmission relation between the rotation shaft (S102) and the sleeve type rotation shaft (AS101) is in a connecting relation allowing for transmission;
3. When the controllable brake device (BK101) and the controllable brake device (BK103) are both in the brake locking state, the rotation shaft (S101) and the rotation shaft (S102) and the sleeve type rotation shaft (AS101) are all connected in the brake locking state, thus not capable of mutually driving;
4. When the controllable brake device (BK101) and the controllable brake device (BK103) are both in the releasing state, the transmission relation between the rotation shaft (S101) and the rotation shaft (S102) and the sleeve type rotation shaft (AS101) is in a releasing relation allowing idle rotation;

FIG. 5 is a schematic structural view showing the rotation shaft (S101) being further installed with a controllable brake device (BK103) according to the embodiment shown in FIG. 2

As shown in FIG. 5, the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rotation shaft (S102) connects to the controllable brake device (BK102) fastened in the housing (H100), and through the rotation shaft (S101) connects to the controllable brake device (BK103) fastened in the housing (H100), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100);
--The shell of the epicycle gear set (EG101) is also installed in the housing (H100), and the output wheel (W102) of the epicycle gear set (EG101) is served to drive the rotation shaft (S102);

A clutch device structured with controllable epicycle gear set and the applied power train thereof as shown in FIG. 5 is through controlling the controllable brake device (BK102) and the controllable brake device (BK103) to generate one or more than one operation functions as following:
1. When the controllable brake device (BK103) is in a brake locking state, and the controllable brake device (BK102) is in a releasing state, the transmission relation between the sleeve type rotation shaft (AS101) and the rotation shaft (S102) is in a connecting relation allowing for transmission;
2. When the controllable brake device (BK103) is in the releasing state, and the controllable brake device (BK102) is in the brake locking state, the transmission relation between the rotation shaft (S101) and the sleeve type rotation shaft (AS101) is in a connecting relation allowing for transmission;
3. When the controllable brake device (BK101) and the controllable brake device (BK102) are both in the brake locking state, the rotation shaft (S101) and the rotation shaft (S102) and the sleeve type rotation shaft (AS101) are all connected in the brake locking state, thus not capable of mutually driving;
4. When the controllable brake device (BK101) and the controllable brake device (BK102) are both in the releasing state, the transmission relation between the rotation shaft (S101) and the rotation shaft (S102) and the sleeve type rotation shaft (AS101) is in a releasing relation allowing for idle rotation;

According to a clutch device structured with controllable epicycle gear set and the applied power train thereof of the present invention, the sleeve type rotation shaft (AS101) is installed with the controllable brake device (BK101) and the rotation shaft (S102) is installed with the controllable brake device (BK102), and the rotation shaft (S101) can be further installed with a controllable brake device (BK103) for increasing the controllable operation function.

FIG. 6 is a schematic structural view showing the rotation shaft (S101) being further installed with a controllable brake device (BK103) according to the embodiment shown in FIG. 3.

As shown in FIG. 6, the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rocker arm (A101) or the sleeve type rotation shaft (AS101) connects to the controllable brake device (BK101) fastened in the housing (H100), and through the rotation shaft (S102) connects to the controllable brake device (BK102) fastened in the housing (H100), and through the rotation shaft (S101) connects to the controllable brake device (BK103) fastened in the housing (H100), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);

The speed ratios of the input wheel (W101) and the output wheel (W102) of the mentioned epicycle gear set (EG101) are the same, and the speed ratios between the above two and the epicycle wheel (W103) can be the same or different; or

The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--The shell of the epicycle gear set (EG101) is also installed in the housing (H100), and the output wheel (W102) of the epicycle gear set (EG101) is served to drive the rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100);

A clutch device structured with controllable epicycle gear set and the applied power train thereof as shown in FIG. 6 is through controlling the controllable brake device (BK101), the controllable brake device (BK102) and the controllable brake device (BK103) to generate one or more than one operation functions as following:
1. When the controllable brake device (BK101) is in a brake locking state, and the controllable brake device (BK102) and the controllable brake device (BK103) are in a releasing state, the transmission relation between the rotation shaft (S101) and the rotation shaft (S102) is in a connecting relation allowing for transmission;
2. When the controllable brake device (BK101) and the controllable brake device (BK103) are in the releasing state, and the controllable brake device (BK102) is in the brake locking state, the transmission relation between the rotation shaft (S101) and the sleeve type rotation shaft (AS101) is in a connecting relation allowing for transmission;
3. When the controllable brake device (BK103) is in the brake locking state, the controllable brake device (BK101) and the controllable brake device (BK102) are in the releasing state, the transmission relation between the sleeve type rotation shaft (AS101) and the rotation shaft (S102) is in a connecting relation allowing for transmission;
4. When two or more than two of the controllable brake device (BK101) and the controllable brake device (BK102) and the controllable brake device (BK103) are in the brake locking state, the rotation shaft (S101) and the rotation shaft (S102) and the sleeve type rotation shaft (AS101) are all connected in the brake locking state, thus not capable of mutually driving;
5. When the controllable brake device (BK101) and the controllable brake device (BK102) and the controllable brake device (BK103) are all in the releasing state, the transmission relation between the rotation shaft (S101) and the rotation shaft (S102) and the sleeve type rotation shaft (AS101) is a releasing relation allowing for idle rotation.

The present invention relates to a clutch device structured with controllable epicycle gear set and the applied power train thereof, in which a controllable brake device (BK101) is used to control an epicycle gear set (EG101) to constitute the function of controllable epicycle type clutch device; the power train adopting the clutch device structured by the controllable brake device (BK101) controlling the epicycle gear set (EG101) can be widely applied in a power train driven by single rotary kinetic power source, and the structural type can be an in-series coaxial line structure, or multiple in-parallel axial lines for satisfying the requirements of the applied space.

The structures and embodiments of the clutch device structured with controllable epicycle gear set and the applied power train thereof are as followings:

FIG. 7 is a schematic structural view showing the output end of a first rotary kinetic power source (P1) being combined with a rotation shaft (S101) combined with an input wheel (W101) of an epicycle gear set (EG101), and a rocker arm (A101) or a sleeve type rotation shaft (AS101) driven by an epicycle wheel (W103) of the epicycle gear set (EG101) being connected to an action side of a controllable brake device (BK101) while the other action side of the controllable brake device (BK101) being fixed in a housing (H100).

As shown in FIG.7, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--One end of the rotation shaft (S101) is combined with the input wheel (W101) of the epicycle gear set (EG101), and the other end of the rotation shaft (S101) is combined with an output/input end rotation shaft (S1011) of the first rotary kinetic power source (P1), and the rotation shaft (S102) combined with the output wheel (W102) of the epicycle gear set (EG101) is served as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

FIG. 8 is a schematic view showing the structure shown in FIG. 7 wherein a first transmission device (T1) being installed between the first rotary kinetic power source (P1) and the rotation shaft (S101) driven by the input wheel (W101) of the epicycle gear set (EG101), according to one embodiment of the present invention.

As shown in FIG.8, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), the output/input end rotation shaft (S1013) at the other end of the first transmission device (T1) is combined with an output/input end rotation shaft (S1011) of the first rotary kinetic power source (P1), and the rotation shaft (S102) combined with the output wheel (W102) of the epicycle gear set (EG101) is served as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

FIG. 9 is a schematic view showing the structure shown in FIG. 7 wherein the output wheel (W102) of the epicycle gear set (EG101) and the output/input end of the rotation shaft (S102) being installed with a second transmission device (T2) and an output/input end rotation shaft (S1021), according to one embodiment of the present invention.

As shown in FIG.9, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Second transmission device (T2): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The rotation shaft (S101) combined with the input wheel (W101) of the epicycle gear set (EG101) is combined with the output/input end rotation shaft (S1011) of the first rotary kinetic power source (P1), and the rotation shaft (S102) combined with the output wheel (W102) of the epicycle gear set (EG101) is combined with the output/input end rotation shaft (S1022) of the second transmission device (T2), the output/input end rotation shaft (S1023) at the other end of the second transmission device (T2) is combined with the rotation shaft (S1021) for serving as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

FIG. 10 is a schematic view showing the structure shown in FIG. 7 wherein the first transmission device (T1) being installed between the first rotary kinetic power source (P1) and the rotations shaft (S101) driven by the input wheel (W101) ofthe epicycle gear set (EG101), and the output wheel (W102) of the epicycle gear set (EG101) and the output/input end of the rotation shaft (S102) being installed with the second transmission device (T2) and the output/input end rotation shaft (S1021), according to one embodiment of the present invention.

As shown in FIG. 10, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--First transmission device (T1), Second transmission device (T2): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), and the output/input end rotation shaft (S1013) at the other end of the first transmission device (T1) is combined with the output/input end rotation shaft (S1011) of the first rotary kinetic power source (P1), the rotation shaft (S102) combined with the output wheel (W102) of the epicycle gear set (EG101) is combined with the output/input end rotation shaft (S1022) of the second transmission device (T2), the output/input end rotation shaft (S1023) at the other end of the second transmission device (T2) is combined with the rotation shaft (S1021) for serving as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

FIG. 11 is a schematic structural view showing the rotation shaft (S102) combined with the first rotary kinetic power source (P1) and the transmission unit (T200) and the epicycle gear set (EG101) and the output wheel (W102) of the epicycle gear set (EG101) being combined at an action side of a controllable brake device (BK102), and the other action side of the controllable brake device (BK102) is fixed in the housing (H100), and the rocker arm (A101) or the sleeve type rotation shaft (AS101) driven by the epicycle wheel (W103) of the epicycle gear set (EG101) being combined with the an input end rotation shaft (S1031) of the transmission unit (T200), and the output end of the transmission unit (T200) being installed with a rotation shaft (S110), according to one embodiment of the present invention.

As shown in FIG. 11, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Transmission unit (T200): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with an output/input end rotation shaft (S1011) of the first rotary kinetic power source (P1), and the other end of the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to one action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) drives the output/input end rotation shaft (S1031) of the transmission unit (T200), and the other output/input end rotation shaft (S1032) of the transmission unit (T200) drives the output/input end rotation shaft (S110).

FIG. 12 is a schematic view showing the structure shown in FIG. 11 wherein the first transmission device (T1) being installed between the rotation shaft (S101) combined with the input wheel (W101) of the epicycle gear set (EG101) and the first rotary kinetic power source (P1), according to one embodiment of the present invention.

As shown in FIG. 12, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--Transmission unit (T200): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to one action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) drives the output/input end rotation shaft (S1031) of the transmission unit (T200), and the other output/input end rotation shaft (S1032) of the transmission unit (T200) drives the output/input end rotation shaft (S110).

FIG. 13 is a schematic view showing the structure shown in FIG. 11 wherein a planetary gear set (T300) being installed between the input end rotation shaft (S1031) of the transmission unit (T200) and the rocker arm (A101) or the sleeve type rotation shaft (AS101) driven by the epicycle wheel (W103) of the epicycle gear set (EG101), according to one embodiment of the present invention.

As shown in FIG. 13, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Transmission unit (T200): which is constituted by the automatic, manumatic, semi-automatic, or manual gear shifting device with fixed or variable speed ratios which is structured by a transmission gear set composed of gears, friction wheels, pulleys and pulley belts, chains and chain wheels, or a planetary type transmission gear set, or an epicycle type transmission gear set, or the CVT, or the hydraulic transmission device;
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1031) of the transmission unit (T200), and the sun wheel (W111) is combined with the sleeve type rotation shaft (AS101) of the epicycle gear set (EG101);
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed on the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1031) of the transmission unit (T200), and the other output/input end rotation shaft (S1032) of the transmission unit (T200) drives the rotation shaft (S110).

FIG. 14 is a schematic view showing the structure shown in FIG. 11 wherein the first transmission device (T1) being installed between the rotation shaft (S101) combined with the input wheel (W101) of the epicycle gear set (EG101) and the first rotary kinetic power source (P1), and the planetary gear set (T300) being installed between the input end rotation shaft (S1031) of the transmission unit (T200) and the rocker arm (A101) or the sleeve type rotation shaft (AS101) driven by the epicycle wheel (W103) of the epicycle gear set (EG101), according to one embodiment of the present invention.

As shown in FIG. 14, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--First transmission device (T1): which is constituted by the automatic, manumatic, semi-automatic, or manual gear shifting device with fixed or variable speed ratios which is structured by a transmission gear set composed of gears, friction wheels, pulleys and pulley belts, chains and chain wheels, or a planetary type transmission gear set, or an epicycle type transmission gear set, or the CVT, or the hydraulic transmission device;
--Transmission unit (T200): which is constituted by the automatic, manumatic, semi-automatic, or manual gear shifting device with fixed or variable speed ratios which is structured by a transmission gear set composed of gears, friction wheels, pulleys and pulley belts, chains and chain wheels, or a planetary type transmission gear set, or an epicycle type transmission gear set, or the CVT, or the hydraulic transmission device;
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1031) of the transmission unit (T200), and the sun wheel (W111) is combined with the sleeve type rotation shaft (AS101) of the epicycle gear set (EG101);
--The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed on the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1031) of the transmission unit (T200), and the other output/input end rotation shaft (S1032) of the transmission unit (T200) drives the rotation shaft (S110).

FIG. 15 is a schematic view showing the structure shown in FIG. 11 wherein the transmission unit (T200) being replaced by a differential output epicycle gear set (T400), according to one embodiment of the present invention.

As shown in FIG. 15, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Differential output epicycle gear set (T400): an epicycle gear set structured including by an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS101);

The mentioned output/input wheel (W401), the output/input wheel (W402) and the epicycle wheel (W403) are composed of bevel gears or bevel friction wheels;

The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings; -- One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) is used to drive the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

FIG. 16 is a schematic structural view showing the transmission unit (T200) shown in FIG. 12 being replaced by the differential output epicycle gear set (T400), according to one embodiment of the present invention.

As shown in FIG. 16, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--First transmission device (T1): which is constituted by the automatic, manumatic, semi-automatic, or manual gear shifting device with fixed or variable speed ratios which is structured by a transmission gear set composed of gears, friction wheels, pulleys and pulley belts, chains and chain wheels, or a planetary type transmission gear set, or an epicycle type transmission gear set, or the CVT, or the hydraulic transmission device;
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS101);

The mentioned output/input wheel (W401), the output/input wheel (W402) and the epicycle wheel (W403) are composed of bevel gears or bevel friction wheels;

The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
-- The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) is used to drive the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

FIG. 17 is a schematic structural view showing the transmission unit (T200) shown in FIG. 13 being replaced by the differential output epicycle gear set (T400), according to one embodiment of the present invention.

As shown in FIG. 17, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the rotation shaft (S102), and the other action side is fixed in the housing (H100);
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS111);

The mentioned output/input wheel (W401), the output/input wheel (W402) and the epicycle wheel (W403) are composed of bevel gears or bevel friction wheels;

The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1041) of the differential output epicycle gear set (T400), and the sun wheel (W111) is combined with the sleeve type rotation shaft (AS101) of the epicycle gear set (EG101);
--One end of the rotation shaft (S101) is combined with the rotation shaft (S101) of the first rotary kinetic power source (P1), the other end of the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed in the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

FIG. 18 is a schematic structural view showing the transmission unit (T200) shown in FIG. 14 being replaced by the differential output epicycle gear set (T400), according to one embodiment of the present invention.

As shown in FIG. 18, it mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--First transmission device (T1): which is constituted by the automatic, manumatic, semi-automatic, or manual gear shifting device with fixed or variable speed ratios which is structured by a transmission gear set composed of gears, friction wheels, pulleys and pulley belts, chains and chain wheels, or a planetary type transmission gear set, or an epicycle type transmission gear set, or the CVT, or the hydraulic transmission device;
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1041) of the differential output epicycle gear set (T400), and the sun wheel (W111) is combined with the sleeve type rotation shaft (AS101) of the epicycle gear set (EG101);
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS111);

The mentioned output/input wheel (W401), the output/input wheel (W402) and the epicycle wheel (W403) are composed of bevel gears or bevel friction wheels;

The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
-- The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed in the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

FIG. 19 is a schematic structural view showing a limited slip differential device (LSD401) being installed between the output/input wheel (W401) and the output/input wheel (W402) of the differential output epicycle gear set (T400), according to one embodiment of the present invention.

As shown in FIG. 19, in the differential output epicycle gear set (T400) of FIG. 15, FIG. 16, FIG. 17 and FIG. 18, a limited slip differential device (LSD401) can be further installed between shaft ends of the differential output/input end rotation shaft (S401) and the differential output/input end rotation shaft (S402) inside the output/input wheel (W401), the output/input wheel (W402) and the epicycle wheel (W403), which mainly consists of:
--Limited slip differential device (LSD401): which is constituted by a mechanical limited slip differential device, torque sensing type limited slip differential device, viscous coupling type limited slip differential device or electromagnetic coupling type limited slip differential device, and installed in the differential output epicycle gear set (T400), and disposed between shaft ends of the differential output/input end rotation shaft (S401) and the differential output/input end rotation shaft (S402) inside the output/input wheel (W401), the output/input wheel (W402) and the epicycle wheel (W403), so when one of the differential output/input end rotation shaft (S401) and the differential output/input end rotation shaft (S402) slips, the other differential output/input end rotation shaft can still output the rotary torque.

The present invention relates to a clutch device structured with controllable epicycle gear set and the applied power train thereof further by using the controllable brake device to manipulate an epicycle gear set (EG101), in which the power train having the clutch device structured by using the controllable brake device to manipulate the epicycle gear set (EG101) can be widely applied in a dual rotary kinetic power source or a triple rotary kinetic power source, the structural configuration includes a coaxial in-series structure or a multiple axial in-parallel structure for satisfying the requirement of applied space.

The structures and embodiments of a clutch device structured with controllable epicycle gear set and the applied power train thereof are as followings:

FIG.20 is a schematic structural view showing a rocker arm (A101) and a sleeve type rotation shaft (AS101) driven by a first rotary kinetic power source (P1) and an epicycle wheel (W103) of an epicycle gear set (EG101) being combined with a controllable brake device (BK101), and an input wheel (W102) of the epicycle gear set (EG101) and an output/input end of a rotation shaft (S102) being combined with a second rotary kinetic power source (P2) and an output/input end rotation shaft (S1026), according to one embodiment of the present invention.

As shown in FIG. 20, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--One end of the rotation shaft (S101) is combined with the input wheel (W101) of the epicycle gear set (EG101), the other end of the rotation shaft (S101) is combined with an output/input end rotation shaft (S1011) of the first rotary kinetic power source (P1), and the rotation shaft (S102) combined with the output wheel (W102) of the epicycle gear set (EG101) is served as an output/input end for being combined with an output/input end rotation shaft (S1024) of the second rotary kinetic power source (P2), and the other output/input end rotation shaft (S1025) of the second rotary kinetic power source (P2) is combined with a rotation shaft (S1026) for being served as an output/input end;
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing between the rotation shaft (S101) and the rotation shaft (S102) are enabled to be controlled, so as to further control the operation relation between the first rotary kinetic power source (P1), the second rotary kinetic power source (P2) and the rotation shaft (S1026); for example controlling one or both of the first rotary kinetic power source (P1) and the second rotary kinetic power source (P2) to drive the rotation shaft (S1026).

FIG. 21 is a schematic view showing a first transmission device (T1) being installed between the first rotary kinetic power source (P1) and the controllable brake device (BK101), and the input wheel (W102) of the epicycle gear set (EG101) and the output/input end of the rotation shaft (S102) being combined with the second rotary kinetic power source (P2) and the output/input end rotation shaft (S1026) shown in FIG. 20, according to one embodiment of the present invention.

As shown in FIG. 21, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), and the output/input end rotation shaft (S1013) at the other end of the first transmission device (T1) is combined with the output/input end rotation shaft (S1011) of the first rotary kinetic power source (P1);
--The rotation shaft (S102) combined with the output wheel (W102) of the epicycle gear set (EG101) is combined with the output/input end rotation shaft (S1024) of the second rotary kinetic power source (P2), and the output/input end rotation shaft (S1025) at the other end of the second rotary kinetic power source (P2) is combined with the rotation shaft (S1026);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing between the rotation shaft (S101) and the rotation shaft (S102) are enabled to be controlled, so as to further control the operation relation between the first rotary kinetic power source (P1), the second rotary kinetic power source (P2) and the rotation shaft (S1026); for example controlling one or both of the first rotary kinetic power source (P1) and the second rotary kinetic power source (P2) to drive the rotation shaft (S1026).

FIG. 22 is a schematic view showing a third rotary kinetic power source (P3) being installed between the first rotary kinetic power source (P1) and the controllable brake device (BK101) shown in FIG. 20, according to one embodiment of the present invention.

As shown in FIG. 22, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--The other end of the rotation shaft (S101) combined with the input wheel (W101) of the epicycle gear set (EG101) is combined to the output/input end rotation shaft (S1051) of the third rotary kinetic power source (P3);
--The rotation shaft (S102) combined with the output wheel (W102) of the epicycle gear set (EG101) is combined with the output/input end rotation shaft (S1024) of the second rotary kinetic power source (P2), and the output/input end rotation shaft (S1025) at the other end of the second rotary kinetic power source (P2) is combined with the rotation shaft (S1026) for being served as an output/input end;
--The output/input end rotation shaft (S1011) of the first rotary kinetic power source (P1) is combined with the output/input end rotation shaft (S1052) of the third rotary kinetic power source (P3), and the other output/input end rotation shaft (S1051) of the third rotary kinetic power source (P3) is combined with the rotation shaft (S101) combined with the input wheel (W101) of the epicycle gear set (EG101);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing functions between the rotation shaft (S101) and the rotation shaft (S102) are enabled to be controlled, so as to further control the operation relation between the first rotary kinetic power source (P1), the second rotary kinetic power source (P2), the third rotary kinetic power source (P3) and the rotation shaft (S1026); for example controlling one or both of the first rotary kinetic power source (P1) and the second rotary kinetic power source (P2) to drive the rotation shaft (S1026), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

FIG. 23 is a schematic view showing a third rotary kinetic power source (P3) being installed between the first transmission device (T1) and the controllable brake device (BK101) shown in FIG. 21, according to one embodiment of the present invention.

As shown in FIG. 23, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--First transmission device (T1): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined to the output/input end rotation shaft (S1051) of the third rotary kinetic power source (P3), the other output/input end rotation shaft (S1052) of the third rotary kinetic power source (P3) is combined with the output/input end rotation shaft (S1012) of the first transmission device (T1), and the other output/input end rotation shaft (S1013) of the first transmission device (T1) is combined with the output/input end rotation shaft (S1011) of the first rotary kinetic power source (P1);
--The rotation shaft (S102) combined with the output wheel (W102) of the epicycle gear set (EG101) is combined with the output/input end rotation shaft (S1024) of the second rotary kinetic power source (P2), and the other output/input end rotation shaft (S1025) of the second rotary kinetic power source (P2) is combined with the rotation shaft (S1026) for being served as the output/input end;
--The output/input end rotation shaft (S1011) of the first rotary kinetic power source (P1) is combined with the output/input end rotation shaft (S1013) of the first transmission device (T1), the other output/input end rotation shaft (S1012) of the first transmission device (T1) is combined with the output/input end rotation shaft (S1052) of the third rotary kinetic power source (P3), and the other output/input end rotation shaft (S1051) of the third rotary kinetic power source (P3) is combined with rotation shaft (S101) combined with the input wheel (W101) of the epicycle gear set (EG101);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing functions between the rotation shaft (S101) and the rotation shaft (S102) are enabled to be controlled, so as to further control the operation relation between the first rotary kinetic power source (P1), the second rotary kinetic power source (P2), the third rotary kinetic power source (P3) and the rotation shaft (S1026); for example controlling one or both of the first rotary kinetic power source (P1) and the second rotary kinetic power source (P2) to drive the rotation shaft (S1026), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

FIG. 24 is a schematic structural view showing the present invention being structured by the first rotary kinetic power source (P1) and a transmission unit (T200) and the epicycle gear set (EG101) and a controllable brake device (BK102), and the output wheel (W102) of the epicycle gear set (EG101) and the output/input end of the rotation shaft (S102) being combined with the second rotary kinetic power source (P2), the epicycle wheel (W103) of the epicycle gear set (EG101) being provided for driving the rocker arm (A101) and the sleeve type rotation shaft (AS101), and the sleeve type rotation shaft (AS101) being provided for driving the output/input end rotation shaft (S1031) of the transmission unit (T200), and the other output/input end rotation shaft (S1032) of the transmission unit (T200) being installed with a rotation shaft (S110), according to one embodiment of the present invention.

As shown in FIG. 24, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined with the controllable brake device (BK102) and combined with the second rotary kinetic power source (P2), and the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft; (AS101) is provided for driving the output/input end rotation shaft (S1031) of the transmission unit (T200), the other output/input end rotation shaft (S1032) of the transmission unit (T200) is provided for driving the output/input end rotation shaft (S110);
--Through controlling the controllable brake device (BK102) to perform brake locking or releasing, the operations of connecting for transmission or releasing functions between the rotation shaft (S101) and the sleeve type rotation shaft (AS101) are enabled to be controlled, so as to further control the operation relation between the first rotary kinetic power source (P1), the second rotary kinetic power source (P2) and the rotation shaft (S110); for example controlling one or both of the first rotary kinetic power source (P1) and the second rotary kinetic power source (P2) to drive the rotation shaft (S110).

FIG. 25 is a schematic view showing the structure in FIG. 24 in which the input wheel (W101) of the epicycle gear set (EG101) being combined with the rotation shaft (S101) and combined with the rotation shaft (S1011) of the first rotary kinetic power source (P1), the rotation shaft (S101) being combined to an action side of a controllable brake device (BK103), and the other action end of the controllable brake device (BK103) being fixed in the housing (H100), a planetary gear set (300) being installed between the rotation shaft (S102) combined with the output wheel (W102) of the epicycle gear set (EG101) and the second rotary kinetic power source (P2), the output/input end of the rotation shaft (S102) combined with the output wheel (W102) of the epicycle gear set (EG101) being combined with a rocker arm (A111) of a planetary gear set (T300), an outer annular wheel (W113) of the planetary gear set (T300) being fixed in the housing (H100), a sun wheel (W111) of the planetary gear set (T300) being combined with the second rotary kinetic power source (P2), the epicycle wheel (W103) of the epicycle gear set (EG101) being provided for driving the rocker arm (A101) and the sleeve type rotation shaft (AS101), and the sleeve type rotation shaft (AS101) being provided for driving the output/input end rotation shaft (S1031) of the transmission unit (T200), according to one embodiment of the present invention.

As shown in FIG. 25, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
-- Planetary gear set (T300): constituted by a sun wheel (W111), a planetary wheel (W112), an outer annular wheel (W113) composed of friction wheels or gears, and a shell fixed in the housing (H100), wherein the outer annular wheel (W113) is fixed in the shell then fixed in the housing or directly fixed in the housing, the planetary wheel (W112) is combined with the rocker arm (A111) and combined with the rotation shaft (S102), and the sun wheel (W111) is combined with the output/input end rotation shaft (S1024) of the second rotary kinetic power source (P2);
--The output/input end rotation shaft (S102) combined with the output wheel (W102) of the epicycle gear set (EG101) is combined to an action side of the controllable brake device (BK102), the other action side of the controllable brake device (BK102) is fixed in the housing (H100), and the other end of the rotation shaft (S102) is combined with the rocker arm (A111) driven by the planetary wheel (W112) of the planetary gear set (T300);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and is provided for driving the output/input end rotation shaft (S1031) of the transmission unit (T200), and the other output/input end rotation shaft (S1032) of the transmission unit (T200) is provided for driving the rotation shaft (S110);
--The output/input end rotation shaft (S1011) of the first rotary kinetic power source (P1) is combined with the rotation shaft (S101), the rotation shaft (S101) is combined with the input wheel (W101) of the epicycle gear set (EG101), as well as connected to an action side of the controllable brake device (BK103), and the other action side of the controllable brake device (BK103) is fixed in the housing (H100);
--Through controlling one or both of the controllable brake device (BK102) and the controllable brake device (BK103) to perform brake locking or releasing, the operation relation between the first rotary kinetic power source (P1), the second rotary kinetic power source (P2) and the rotation shaft (S110) is enabled to be controlled; for example controlling the operations of connecting for transmission or releasing functions between the rotation shaft (S101) and the sleeve type rotation shaft (AS101) or between the rotation shaft (S102) and the sleeve type rotation shaft (AS101), one or both of the first rotary kinetic power source (P1) and the second rotary kinetic power source (P2) is further controlled to drive the rotation shaft (S110).

FIG. 26 is a schematic view showing the second rotary kinetic power source (P2) shown in FIG. 24 being installed at one end of the output/input end rotation shaft (S110) of the transmission unit (T200).

As shown in FIG. 26, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S1025) of the second rotary kinetic power source (P2), and the other end of the rotation shaft (S110) is served as an output/input end;
--Through controlling the controllable brake device (BK102) to perform brake locking or releasing, the operations of connecting for transmission or releasing between the rotation shaft (S101) and the sleeve type rotation shaft (AS101) are enabled to be controlled, so as to further control the operation relation between the first rotary kinetic power source (P1), the second rotary kinetic power source (P2) and the rotation shaft (S110); for example controlling one or both of the first rotary kinetic power source (P I) and the second rotary kinetic power source (P2) to drive the rotation shaft (S110).

FIG. 27 is a schematic view showing the structure shown in FIG. 26 in which an epicycle gear set (EG201) and a controllable brake device (BK104) being installed between one end of the output/input end rotation shaft (S110) of the transmission unit (T200) and the second rotary kinetic power source (P2).

As shown in FIG. 27, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Epicycle gear set (EG201): constituted by an input wheel (W201) and an output wheel (W202) and at least an epicycle wheel (W203), and including through bevel gears engaging with each other, or through bevel friction wheels mutually performing friction transmissions to form an epicycle gear set function, and structured by the rotation shaft (S201), the rotation shaft (S202), the rocker arm (A201), the sleeve type rotation shaft (AS201) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
-- Controllable brake device (BK104): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS201) or the rocker arm (A201), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S202) combined with the output wheel (W202) of the epicycle gear set (EG201), the other output/input end rotation shaft (S201) combined with the input wheel (W201) of the epicycle gear set (EG201) is combined with the output/input end rotation shaft (S1025) of the second rotary kinetic power source (P2), and the epicycle wheel (W203) of the epicycle gear set (EG201) is provided for driving the rocker arm (A201) and the sleeve type rotation shaft (AS201), the sleeve type rotate shaft (AS201) is capable of rotating on the rotation shaft (S201) and is provided for connecting to an action side of the controllable brake device (BK104), the other action side of the controllable brake device (BK104) is fixed in the housing (H100), and the other end of the rotation shaft (S110) is served as an output/input end;
--Through controlling one or both of the controllable brake device (BK102) and the controllable brake device (BK104) to perform brake locking or releasing, the operation relation between the first rotary kinetic power source (P1), the second rotary kinetic power source (P2) and the rotation shaft (S110) is enabled to be controlled; for example controlling the operations of connecting for transmission or releasing functions between the rotation shaft (S101) and the sleeve type rotation shaft (AS101) or between the rotation shaft (S201) and the rotation shaft (S202), one or both of the first rotary kinetic power source (P1) and the second rotary kinetic power source (P2) is controlled to drive the rotation shaft (S110).

FIG. 28 is a schematic view showing the structure shown in FIG. 26 in which the third rotary kinetic power source (P3) being installed between the first rotary kinetic power source (P1) and the rotation shaft (S101) combined with the input wheel (W101) of the epicycle gear set (EG101).

As shown in FIG. 28, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1051) of the third rotary kinetic power source (P3), the rotation shaft (S1052) at the other end of the third rotary kinetic power source (P3) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S1025) of the second rotary kinetic power source (P2), and the other end of the rotation shaft (S110) is served as an output/input end;
--The rotation shaft (S101) combined with the input wheel (W101) of the epicycle gear set (EG101) is combined with the output/input end rotation shaft (S1051) of the third rotary kinetic power source (P3), and the other output/input end rotation shaft (S1052) of the third rotary kinetic power source (P3) is combined with the output/input end rotation shaft (S1011) of the first rotary kinetic power source (P1);
--Through controlling the controllable brake device (BK102) to perform brake locking or releasing, the operations of connecting for transmission or releasing functions between the rotation shaft (S101) and the sleeve type rotation shaft (AS101) are enabled to be controlled, so as to further control the operation relation between the first rotary kinetic power source (P1), the second rotary kinetic power source (P2), the third rotary kinetic power source (P3) and the rotation shaft (S110); for example controlling one or both of the first rotary kinetic power source (P1) and the second rotary kinetic power source (P2) to drive the rotation shaft (S110), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

FIG. 29 is a schematic view showing the structure shown in FIG. 28 in which the epicycle gear set (EG201) and the controllable brake device (BK104) being installed between one end of the output/input end rotation shaft (S110) of the transmission unit (T200) and the second rotary kinetic power source (P2).

As shown in FIG. 29, it mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Epicycle gear set (EG201): constituted by an input wheel (W201) and an output wheel (W202) and at least an epicycle wheel (W203), and including through bevel gears engaging with each other, or through bevel friction wheels mutually performing friction transmissions to form an epicycle gear set function, and structured by the rotation shaft (S201), the rotation shaft (S202), the rocker arm (A201), the sleeve type rotation shaft (AS201) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
-- Controllable brake device (BK104): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS201) or the rocker arm (A201), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1051) of the third rotary kinetic power source (P3), the rotation shaft (S1052) at the other end of the third rotary kinetic power source (P3) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S202) combined with the output wheel (W202) of the epicycle gear set (EG201), the other output/input end rotation shaft (S201) combined with the input wheel (W201) of the epicycle gear set (EG201) is combined with the output/input end rotation shaft (S1025) of the second rotary kinetic power source (P2), and the epicycle wheel (W203) of the epicycle gear set (EG201) is provided for driving the rocker arm (A201) and the sleeve type rotation shaft (AS201), the sleeve type rotate shaft (AS201) is capable of rotating on the rotation shaft (S201) and is provided being combined to an action side of the controllable brake device (BK104), the other action side of the controllable brake device (BK104) is fixed in the housing (H100), and the other end of the rotation shaft (S110) is served as an output/input end;
--The rotation shaft (S101) combined with the input wheel (W101) of the epicycle gear set (EG101) is combined with the output/input end rotation shaft (S1051) of the third rotary kinetic power source (P3), and the other output/input end rotation shaft (S1052) of the third rotary kinetic power source (P3) is combined with the output/input end rotation shaft (S1011) of the first rotary kinetic power source (P1);
--Through controlling one or both of the controllable brake device (BK102) and the controllable brake device (BK104) to perform brake locking or releasing, the operation relation between the first rotary kinetic power source (P1), the second rotary kinetic power source (P2), the third rotary kinetic power source (P3) and the rotation shaft (S110) are able to be controlled; for example controlling the operations of connecting for transmission or releasing functions between the rotation shaft (S101) and the sleeve type rotation shaft (AS101) or between the rotation shaft (S201) and the rotation shaft (S202), one or both of the first rotary kinetic power source (P1) and the second rotary kinetic power source (P2) is controlled to drive the rotation shaft (S110), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

## Claims

1. A clutch device structured with controllable epicycle gear set and the applied power train thereof, wherein a rotation shaft (S101) combined with an input wheel (W101) of an epicycle gear set (EG101) is served as an output/input end, and a rotation shaft (S102) combined with an output wheel (W102) is served as an output/input end, and a rocker arm (A101) and a sleeve type rotation shaft (AS101) linked by the epicycle wheels (W103) are served as an output/input end, so that a part or all of the three output/input ends are respectively combined to one action side of a corresponding controllable brake device, and the other action side of the controllable brake device is connected to a housing (H100); through controlling the controllable brake device to perform brake locking or releasing, the operations of transmission function of combining transmission or releasing between the rotation shaft (S101) at the output/input end, the rotation shaft (S102) at the output/input end and the sleeve type rotation shaft (AS101) of the epicycle gear set (EG101) are enabled to be controlled;
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--The shell of the epicycle gear set (EG101) is also installed in the housing (H100), and the output wheel (W102) of the epicycle gear set (EG101) is served to drive the rotation shaft (S102).

2. A clutch device structured with controllable epicycle gear set and the applied power train thereof as claimed in claim 1, which is through controlling the controllable brake device (BK101) to perform brake locking or releasing, so as to enable the operation of clutch function between the rotation shaft (S101) and the rotation shaft (S102).

3. A clutch device structured with controllable epicycle gear set and the applied power train thereof as claimed in claim 1, wherein the rocker arm (A101) and the sleeve type rotation shaft (AS101) linked by the epicycle wheels (W103) being served as an output/input end, and coaxially sleeved with the rotation shaft (S101) or the rotation shaft (S102), and the controllable brake device (BK102) being combined and fastened in the housing (H100) through the rotation shaft (S102), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--The shell of the epicycle gear set (EG101) is also installed in the housing (H100), and the output wheel (W102) of the epicycle gear set (EG101) is served to drive the rotation shaft (S102).

4. A clutch device structured with controllable epicycle gear set and the applied power train thereof as claimed in claim 3, which is through controlling the controllable brake device (BK102) to perform brake locking or releasing, so as to enable the operation of clutch function between the rotation shaft (S101) and the sleeve type rotation shaft (AS101).

5. A clutch device structured with controllable epicycle gear set and the applied power train thereof as claimed in claim 1, wherein the rotation shaft (S102) serving to provide the output function is further installed with a controllable brake device (BK102) capable of preventing reverse linkage, which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--The shell of the epicycle gear set (EG101) is also installed in the housing (H100), and the output wheel (W102) of the epicycle gear set (EG101) is served to drive the rotation shaft (S102).

6. A clutch device structured with controllable epicycle gear set and the applied power train thereof as claimed in claim 5, which is through controlling the controllable brake device (BK101) and the controllable brake device (BK102) to generate one or more than one operation functions as following:
1) When the controllable brake device (BK101) is in a brake locking state, and the controllable brake device (BK102) is in a releasing state, the transmission relation between the rotation shaft (S101) and the rotation shaft (S102) is in a connecting relation allowing for transmission;
2) When the controllable brake device (BK101) is in the releasing state, and the controllable brake device (BK102) is in the brake locking state, the transmission relation between the rotation shaft (S101) and the sleeve type rotation shaft (AS101) is in a connecting relation allowing for transmission;
3) When the controllable brake device (BK101) and the controllable brake device (BK102) are both in the brake locking state, the rotation shaft (S101) and the rotation shaft (S102) and the sleeve type rotation shaft (AS101) are all connected in the brake locking state, thus not capable of mutually driving;
4) When the controllable brake device (BK101) and the controllable brake device (BK102) are both in the releasing state, the transmission relation between the rotation shaft (S101) and the rotation shaft (S102) and the sleeve type rotation shaft (AS101) is in a releasing relation allowing for idle rotation.

7. A clutch device structured with controllable epicycle gear set and the applied power train thereof as claimed in claim 1, wherein the rotation shaft (S101) is further installed with a controllable brake device (BK103), so that the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rocker arm (A101) or the sleeve type rotation shaft (AS101) connects to the controllable brake device (BK101) fastened in the housing (H100), and through the rotation shaft (S101) connects to the controllable brake device (BK103) fastened in the housing (H100), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100);
--The shell of the epicycle gear set (EG101) is also installed in the housing (H100), and the output wheel (W102) of the epicycle gear set (EG101) is served to drive the rotation shaft (S102).

8. A clutch device structured with controllable epicycle gear set and the applied power train thereof as claimed in claim 7, which is through controlling the controllable brake device (BK101) and the controllable brake device (BK103) to generate one or more than one operation functions as following:
1) When the controllable brake device (BK101) is in a brake locking state, and the controllable brake device (BK103) is in a releasing state, the transmission relation between the rotation shaft (S101) and the rotation shaft (S102) is in a connecting relation allowing for transmission;
2) When the controllable brake device (BK101) is in the releasing state, and the controllable brake device (BK103) is in the brake locking state, the transmission relation between the rotation shaft (S102) and the sleeve type rotation shaft (AS101) is in a connecting relation allowing for transmission;
3) When the controllable brake device (BK101) and the controllable brake device (BK103) are both in the brake locking state, the rotation shaft (S101) and the rotation shaft (S102) and the sleeve type rotation shaft (AS101) are all connected in the brake locking state, thus not capable of mutually driving;
4) When the controllable brake device (BK101) and the controllable brake device (BK103) are both in the releasing state, the transmission relation between the rotation shaft (S101) and the rotation shaft (S102) and the sleeve type rotation shaft (AS101) is in a releasing relation allowing for idle rotation.

9. A clutch device structured with controllable epicycle gear set and the applied power train thereof as claimed in claim 3, wherein the rotation shaft (S101) is further installed with a controllable brake device (BK103), so that the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rotation shaft (S102) connects to the controllable brake device (BK102) fastened in the housing (H100), and through the rotation shaft (S101) connects to the controllable brake device (BK103) fastened in the housing (H100), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100);
--The shell of the epicycle gear set (EG101) is also installed in the housing (H100), and the output wheel (W102) of the epicycle gear set (EG101) is served to drive the rotation shaft (S102).

10. A clutch device structured with controllable epicycle gear set and the applied power train thereof as claimed in claim 9, which is through controlling the controllable brake device (BK102) and the controllable brake device (BK103) to generate one or more than one operation functions as following:
1)When the controllable brake device (BK103) is in a brake locking state, and the controllable brake device (BK102) is in a releasing state, the transmission relation between the sleeve type rotation shaft (AS101) and the rotation shaft (S102) is in a connecting relation allowing for transmission;
2)When the controllable brake device (BK103) is in the releasing state, and the controllable brake device (BK102) is in the brake locking state, the transmission relation between the rotation shaft (S101) and the sleeve type rotation shaft (AS101) is in a connecting relation allowing for transmission;
3)When the controllable brake device (BK101) and the controllable brake device (BK102) are both in the brake locking state, the rotation shaft (S101) and the rotation shaft (S102) and the sleeve type rotation shaft (AS101) are all connected in the brake locking state, thus not capable of mutually driving;
4)When the controllable brake device (BK101) and the controllable brake device (BK102) are both in the releasing state, the transmission relation between the rotation shaft (S101) and the rotation shaft (S102) and the sleeve type rotation shaft (AS101) is in a releasing relation allowing for idle rotation.

11. A clutch device structured with controllable epicycle gear set and the applied power train thereof as claimed in claim 5, wherein the rotation shaft (S101) is further installed with a controllable brake device (BK103), so that the input wheel (W101) and the rotation shaft (S101) of the epicycle gear set (EG101) are served as an output/input end, the output wheel (W102) and the rotation shaft (S102) are served as an output/input end, and the epicycle wheels (W103) and the rocker arm (A101) and the sleeve type rotation shaft (AS101) linked by the epicycle wheels (W103) are sleeved on the rotation shaft (S101) or the rotation shaft (S102), and through the rocker arm (A101) or the sleeve type rotation shaft (AS101) connects to the controllable brake device (BK101) fastened in the housing (H100), and through the rotation shaft (S102) connects to the controllable brake device (BK102) fastened in the housing (H100), and through the rotation shaft (S101) connects to the controllable brake device (BK103) fastened in the housing (H100), which mainly consists of:
--Epicycle gear set (EG101): constituted by an input wheel (W101) and an output wheel (W102) and at least an epicycle wheel (W103), and including through the bevel gears engaging with each other, or the bevel friction wheels mutually performing friction transmissions to form the epicycle gear set function, and also constituted by the rotation shaft (S101), the rotation shaft (S102), the rocker arm (A101), the sleeve type rotation shaft (AS101) and a bearing, as well as installed with a shell for being combined in the housing (H100);
The speed ratios of the input wheel (W101) and the output wheel (W102) of the mentioned epicycle gear set (EG101) are the same, and the speed ratios between the above two and the epicycle wheel (W103) can be the same or different; or
The speed ratios of the input wheel (W101) and the output wheel (W102) of the mentioned epicycle gear set (EG101) are different, the speed ratios between the epicycle wheel (W103) and the output wheel (W102) can be the same or different, and the speed ratios between the epicycle wheel (W103) and the input wheel (W101) can be the same or different;
--Rocker arm (A101): having one end provided for allowing the epicycle wheel (W103) to rotate and link, and the other end axially extending toward one or both of the rotation shaft (S101) and the rotation shaft (S102), and combined to the sleeve type rotation shaft (AS101) for being sleeved on one or both of the rotation shaft (S101) and the rotation shaft (S102) and capable of rotating thereon;
--Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the sleeve type rotation shaft (AS101) or the rocker arm (A101), and the other action side is fixed in the housing (H100);
--The shell of the epicycle gear set (EG101) is also installed in the housing (H100), and the output wheel (W102) of the epicycle gear set (EG101) is served to drive the rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is combined with the rotation shaft (S101), and the other action side is fixed in the housing (H100).

12. A clutch device structured with controllable epicycle gear set and the applied power train thereof as claimed in claim 11, which is through controlling the controllable brake device (BK101), the controllable brake device (BK102) and the controllable brake device (BK103) to generate one or more than one operation functions as following:
1)When the controllable brake device (BK101) is in a brake locking state, and the controllable brake device (BK102) and the controllable brake device (BK103) are in a releasing state, the transmission relation between the rotation shaft (S101) and the rotation shaft (S102) is in a connecting relation allowing for transmission;
2)When the controllable brake device (BK101) and the controllable brake device (BK103) are in the releasing state, and the controllable brake device (BK102) is in the brake locking state, the transmission relation between the rotation shaft (S101) and the sleeve type rotation shaft (AS101) is in a connecting relation allowing for transmission;
3)When the controllable brake device (BK103) is in the brake locking state, the controllable brake device (BK101) and the controllable brake device (BK102) are in the releasing state, the transmission relation between the sleeve type rotation shaft (AS101) and the rotation shaft (S102) is in a connecting relation allowing for transmission;
4)When two or more than two of the controllable brake device (BK101) and the controllable brake device (BK102) and the controllable brake device (BK103) are in the brake locking state, the rotation shaft (S101) and the rotation shaft (S102) and the sleeve type rotation shaft (AS101) are all connected in the brake locking state, thus not capable of mutually driving;
5)When the controllable brake device (BK101) and the controllable brake device (BK102) and the controllable brake device (BK103) are all in the releasing state, the transmission relation between the rotation shaft (S101) and the rotation shaft (S102) and the sleeve type rotation shaft (AS101) is in a releasing relation allowing for idle rotation.

13. A clutch device structured with controllable epicycle gear set and the applied power train thereof, in which a controllable brake device (BK101) is used to control an epicycle gear set (EG101) to constitute the function of controllable epicycle type clutch device; the power train adopting the clutch device structured by the controllable brake device (BK101) controlling the epicycle gear set (EG101) can be widely applied in a power train driven by single rotary kinetic power source, and the structural type can be an in-series coaxial line structure, or multiple in-parallel axial lines for satisfying the requirements of the applied space, which mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--One end of the rotation shaft (S101) is combined with the input wheel (W101) of the epicycle gear set (EG101), and the other end of the rotation shaft (S101) is combined with an output/input end rotation shaft (S1011) of the first rotary kinetic power source (P1), and the rotation shaft (S102) combined with the output wheel (W102) of the epicycle gear set (EG101) is served as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

14. A clutch device structured with controllable epicycle gear set and the applied power train thereof as claimed in claim 13, wherein a first transmission device (T1) is further installed between the first rotary kinetic power source (P1) and the rotation shaft (S101) driven by the input wheel (W101) of the epicycle gear set (EG101), and in which:
--First rotary kinetic power source (P1);
--Epicycle gear set (EG101);
--Controllable brake device (BK101);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), the output/input end rotation shaft (S1013) at the other end of the first transmission device (T1) is combined with an output/input end rotation shaft (S1011) of the first rotary kinetic power source (P1), and the rotation shaft (S102) combined with the output wheel (W102) of the epicycle gear set (EG101) is served as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

15. A clutch device structured with controllable epicycle gear set and the applied power train thereof as claimed in claim 13, wherein the output wheel (W102) of the epicycle gear set (EG101) and the output/input end of the rotation shaft (S102) s further installed with a second transmission device (T2) and an output/input end rotation shaft (S1021), and in which:
--First rotary kinetic power source (P1);
--Epicycle gear set (EG101);
--Controllable brake device (BK101);
--Second transmission device (T2): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The rotation shaft (S101) combined with the input wheel (W101) of the epicycle gear set (EG101) is combined with the output/input end rotation shaft (S1011) of the first rotary kinetic power source (P1), and the rotation shaft (S102) combined with the output wheel (W102) of the epicycle gear set (EG101) is combined with the output/input end rotation shaft (S1022) of the second transmission device (T2), the output/input end rotation shaft (S1023) at the other end of the second transmission device (T2) is combined with the rotation shaft (S1021) for serving as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

16. A clutch device structured with controllable epicycle gear set and the applied power train thereof as claimed in claim 13, wherein the first transmission device (T1) is further installed between the first rotary kinetic power source (P1) and the rotations shaft (S101) driven by the input wheel (W101) of the epicycle gear set (EG101), and the output wheel (W102) of the epicycle gear set (EG101) and the output/input end of the rotation shaft (S102) is installed with the second transmission device (T2) and the output/input end rotation shaft (S1021), and in which:
--First rotary kinetic power source (P1);
--Epicycle gear set (EG101);
--Controllable brake device (BK101);
--First transmission device (T1), Second transmission device (T2): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), and the output/input end rotation shaft (S1013) at the other end of the first transmission device (T1) is combined with the output/input end rotation shaft (S1011) of the first rotary kinetic power source (P1), the rotation shaft (S102) combined with the output wheel (W102) of the epicycle gear set (EG101) is combined with the output/input end rotation shaft (S1022) of the second transmission device (T2), the output/input end rotation shaft (S1023) at the other end of the second transmission device (T2) is combined with the rotation shaft (S1021) for serving as an output/input end, the shell of the epicycle gear set (EG101) is fixed in the housing (H100), the epicycle wheel (W103) of the epicycle gear set (EG101) is provided for combining the rocker arm (A101) and combining the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), and the other action side of the controllable brake device (BK101) is fixed in the housing (H100); through controlling the controllable brake device (BK101) to perform brake locking or releasing, the function of connecting for transmission or releasing between the rotation shaft (S101) and the rotation shaft (S102) is enabled to be controlled.

17. A clutch device structured with controllable epicycle gear set and the applied power train thereof as claimed in claim 13, wherein the rotation shaft (S102) combined with the first rotary kinetic power source (P1) and the transmission unit (T200) and the epicycle gear set (EG101) and the output wheel (W102) of the epicycle gear set (EG101) are combined at an action side of a controllable brake device (BK102), and the other action side of the controllable brake device (BK102) is fixed in the housing (H100), and the rocker arm (A101) or the sleeve type rotation shaft (AS101) driven by the epicycle wheel (W103) of the epicycle gear set (EG101) is combined with the an input end rotation shaft (S1031) of the transmission unit (T200), and the output end of the transmission unit (T200) is installed with a rotation shaft (S110), which mainly consists of:
--First rotary kinetic power source (P1): which is constituted by one or more than of one of rotary kinetic power sources capable of generating the output of rotary kinetic power, including an internal combustion engine, external combustion engine, Sterling engine, turbine engine, electric-driven engine, wind-driven blade power set, flow-driven power set, or manual power;
--Epicycle gear set (EG101): which is constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Transmission unit (T200): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with an output/input end rotation shaft (S1011) of the first rotary kinetic power source (P1), and the other end of the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) drives the output/input end rotation shaft (S1031) of the transmission unit (T200), and the other output/input end rotation shaft (S1032) of the transmission unit (T200) drives the output/input end rotation shaft (S110).

18. A clutch device structured with controllable epicycle gear set and the applied power train thereof as claimed in claim 17, wherein the first transmission device (T1) is further installed between the rotation shaft (S101) combined with the input wheel (W101) of the epicycle gear set (EG101) and the first rotary kinetic power source (P1), in which:
--First rotary kinetic power source (P1);
--Epicycle gear set (EG101);
--Controllable brake device (BK102);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--Transmission unit (T200): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) drives the output/input end rotation shaft (S1031) of the transmission unit (T200), and the other output/input end rotation shaft (S1032) of the transmission unit (T200) drives the output/input end rotation shaft (S110).

19. A clutch device structured with controllable epicycle gear set and the applied power train thereof as claimed in claim 17, wherein a planetary gear set (T300) is further installed between the input end rotation shaft (S1031) of the transmission unit (T200) and the rocker arm (A101) or the sleeve type rotation shaft (AS101) driven by the epicycle wheel (W103) of the epicycle gear set (EG101), and in which:
--First rotary kinetic power source (P1);
--Epicycle gear set (EG101);
--Controllable brake device (BK102);
--Transmission unit (T200);
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1031) of the transmission unit (T200), and the sun wheel (W111) is combined with the sleeve type rotation shaft (AS101) of the epicycle gear set (EG101);
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed on the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1031) of the transmission unit (T200), and the other output/input end rotation shaft (S1032) of the transmission unit (T200) drives the rotation shaft (S110).

20. A clutch device structured with controllable epicycle gear set and the applied power train thereof as claimed in claim 17, wherein the first transmission device (T1) is installed between the rotation shaft (S101) combined with the input wheel (W101) of the epicycle gear set (EG101) and the first rotary kinetic power source (P1), and the planetary gear set (T300) is installed between the input end rotation shaft (S1031) of the transmission unit (T200) and the rocker arm (A101) or the sleeve type rotation shaft (AS101) driven by the epicycle wheel (W103) of the epicycle gear set (EG101), and in which:
--First rotary kinetic power source (P1);
--Epicycle gear set (EG101);
--Controllable brake device (BK102);
--first transmission device (T1);
--Transmission unit (T200);
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1031) of the transmission unit (T200), and the sun wheel (W111) is combined with the sleeve type rotation shaft (AS101) of the epicycle gear set (EG101);
--The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed on the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1031) of the transmission unit (T200), and the other output/input end rotation shaft (S1032) of the transmission unit (T200) drives the rotation shaft (S110).

21. A clutch device structured with controllable epicycle gear set and the applied power train thereof as claimed in claim 17, wherein the transmission unit (T200) is replaced by a differential output epicycle gear set (T400), and in which:
--First rotary kinetic power source (P1);
--Epicycle gear set (EG101);
--Controllable brake device (BK102);
--Differential output epicycle gear set (T400): an epicycle gear set structured including by an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS101);
The mentioned output/input wheel (W401), the output/input wheel (W402) and the epicycle wheel (W403) are composed of bevel gears or bevel friction wheels;
The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
-- One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) is used to drive the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

22. A clutch device structured with controllable epicycle gear set and the applied power train thereof as claimed in claim 18, wherein the transmission unit (T200) is replaced by the differential output epicycle gear set (T400), and in which:
--First rotary kinetic power source (P1);
--Epicycle gear set (EG101);
--Controllable brake device (BK102);
first transmission device (T1);
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS101);
The mentioned output/input wheel (W401), the output/input wheel (W402) and the epicycle wheel (W403) are composed of bevel gears or bevel friction wheels;
The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
-- The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100), the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) is used to drive the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

23. A clutch device structured with controllable epicycle gear set and the applied power train thereof as claimed in claim 19, wherein the transmission unit (T200) is replaced by the differential output epicycle gear set (T400), and in which:
--First rotary kinetic power source (P1);
--Epicycle gear set (EG101);
--Controllable brake device (BK102)
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS111);
The mentioned output/input wheel (W401), the output/input wheel (W402) and the epicycle wheel (W403) are composed of bevel gears or bevel friction wheels;
The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1041) of the differential output epicycle gear set (T400), and the sun wheel (W111) is combined with the sleeve type rotation shaft (AS101) of the epicycle gear set (EG101);
--One end of the rotation shaft (S101) is combined with the rotation shaft (S101) of the first rotary kinetic power source (P1), the other end of the rotation shaft (S101) is combined with the input wheel (W101) of the epicycle gear set (EG101), the shell of the epicycle gear set (EG101) is fixed in the housing (H100), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed in the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

24. A clutch device structured with controllable epicycle gear set and the applied power train thereof as claimed in claim 20, wherein the transmission unit (T200) is replaced by the differential output epicycle gear set (T400), and in which:
--First rotary kinetic power source (P1);
--Epicycle gear set (EG101);
--Controllable brake device (BK102);
--First transmission device (T1);
--Planetary gear set (T300): which is constituted by friction wheels or gears, including a sun wheel (W111), a planetary wheel (W112), an outer annular wheel (W113) and a shell to be fixed in the housing (H100), wherein the outer annular wheel (W113) is fixed on the shell then fixed on the housing (H100) or directly fixed on the shell, the planetary wheel (W112) is combined with the rocker arm (A111) and combined with the sleeve type rotation shaft (AS111), the sleeve type rotation shaft (AS111) rotates on the rotation shaft (S101) and drives the output/input end rotation shaft (S1041) of the differential output epicycle gear set (T400), and the sun wheel (W111) is combined with the sleeve type rotation shaft (AS101) of the epicycle gear set (EG101);
--Differential output epicycle gear set (T400): an epicycle gear set structured including by having an output/input wheel (W401), an output/input wheel (W402) and an epicycle wheel (W403), wherein the output/input wheel (W401) is combined with a differential output/input end rotation shaft (S401), the output/input wheel (W402) is combined with a differential output/input end rotation shaft (S402), the epicycle wheel (W403) rotates on a rocker arm (A401), the rocker arm (A401) is combined with an annular input wheel (W400) for being combined with a sleeve type rotation shaft (AS401), and the sleeve type rotation shaft (AS401) rotates on one or both of the differential output/input end rotation shaft (S401) or the differential output/input end rotation shaft (S402), the annular input wheel (W400) is driven by a transmission wheel (W300), and the transmission wheel (W300) is driven by the external rotary kinetic power, i.e. driven by the sleeve type rotation shaft (AS111);
The mentioned output/input wheel (W401), the output/input wheel (W402) and the epicycle wheel (W403) are composed of bevel gears or bevel friction wheels;
The transmission function structured by the transmission wheel (W300) and the annular input wheel (W400) includes being constituted by the automatic, manumatic, semi-automatic, or manual gear shifting device with fixed or variable speed ratios which is structured by the transmission gear set composed of gears, friction wheels, pulleys and pulley belts, chains and chain wheels, or the planetary type transmission gear set, or the epicycle type transmission gear set, or CVT, or the hydraulic transmission device, and a shell and the bearings;
-- The output/input end rotation shaft (S1011) of the first rotary kinetic power source (P1) is combined with the output/input end rotation shaft (S1013) of the first transmission device (T1), the output/input end rotation shaft (S1012) of the first transmission device (T1) is combined with the rotation shaft (S101), the rotation shaft (S101) is combined with the input wheel (W101) of the epicycle gear set (EG101), the shell of the epicycle gear set (EG101) is fixed in the housing (H100), and the output/input end rotation shaft (S102) combined with the output wheel (W102) of the epicycle gear set (EG101) is combined to an action side of the controllable brake device (BK102), the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and drives the sun wheel (W111) of the planetary gear set (T300), the outer annular wheel (W113) of the planetary gear set (T300) is fixed in the housing (H100) through the shell of the planetary gear set (T300) or the outer annular wheel (W113) is directly fixed in the housing (H100), the planetary wheel (W112) of the planetary gear set (T300) is combined with the rocker arm (A111) and combined with the sleeve type rotation shaft (AS111) for driving the output/input end rotation shaft (S1041) of the differential output epicycle gear set (T400), and the transmission wheel (W300) drives the annular input wheel (W400) and then through the epicycle wheel (W403) drives the output/input wheel (W401) and the output/input wheel (W402), the differential output/input end rotation shaft (S401) is connected to the output/input wheel (W401) for being driven by the output/input wheel (W401), the differential output/input end rotation shaft (S402) is connected to the output/input wheel (W402) for being driven by the output/input wheel (W402), and the differential operation is enabled to be performed between the differential output/input end rotation shaft (S401) and the differential output/input end rotation shaft (S402) through the epicycle wheel (W403).

25. A clutch device structured with controllable epicycle gear set and the applied power train thereof as claimed in claims 21, 22, 23 and 24, wherein in the differential output epicycle gear set (T400), a limited slip differential device (LSD401) can be further installed between shaft ends of the differential output/input end rotation shaft (S401) and the differential output/input end rotation shaft (S402) inside the output/input wheel (W401), the output/input wheel (W402) and the epicycle wheel (W403).

26. A clutch device structured with controllable epicycle gear set and the applied power train thereof, wherein it is structured by that rocker arm (A101) and a sleeve type rotation shaft (AS101) driven by a first rotary kinetic power source (P1) and an epicycle wheel (W103) of an epicycle gear set (EG101) are combined with a controllable brake device (BK101), and an input wheel (W102) of the epicycle gear set (EG101) and an output/input end of a rotation shaft (S102) are combined with a second rotary kinetic power source (P2) and an output/input end rotation shaft (S1026), which mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
-- Controllable brake device (BK101): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--One end of the rotation shaft (S101) is combined with the input wheel (W101) of the epicycle gear set (EG101), the other end of the rotation shaft (S101) is combined with an output/input end rotation shaft (S1011) of the first rotary kinetic power source (P1), and the rotation shaft (S102) combined with the output wheel (W102) of the epicycle gear set (EG101) is served as an output/input end for being combined with an output/input end rotation shaft (S1024) of the second rotary kinetic power source (P2), and the other output/input end rotation shaft (S1025) of the second rotary kinetic power source (P2) is combined with a rotation shaft (S1026) for being served as an output/input end;
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing between the rotation shaft (S101) and the rotation shaft (S102) are enabled to be controlled, so as to further control the operation relation between the first rotary kinetic power source (P1), the second rotary kinetic power source (P2) and the rotation shaft (S1026); for example controlling one or both of the first rotary kinetic power source (P1) and the second rotary kinetic power source (P2) to drive the rotation shaft (S1026).

27. A clutch device structured with controllable epicycle gear set and the applied power train thereof as claimed in claim 26, wherein it is further structured by that a first transmission device (T1) is installed between the first rotary kinetic power source (P1) and the controllable brake device (BK101), and the input wheel (W102) of the epicycle gear set (EG101) and the output/input end of the rotation shaft (S102) are combined with the second rotary kinetic power source (P2) and the output/input end rotation shaft (S1026), and in which:
--First rotary kinetic power source (P1);
--Second rotary kinetic power source (P2);
--Epicycle gear set (EG101);
--Controllable brake device (BK101);
--First transmission device (T1): which is constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--The other end of the rotation shaft (S101) combined with the input wheel (W101) of the epicycle gear set (EG101) is combined with the output/input end rotation shaft (S1012) of the first transmission device (T1), and the output/input end rotation shaft (S1013) at the other end of the first transmission device (T1) is combined with the output/input end rotation shaft (S1011) of the first rotary kinetic power source (P1);
--The rotation shaft (S102) combined with the output wheel (W102) of the epicycle gear set (EG101) is combined with the output/input end rotation shaft (S1024) of the second rotary kinetic power source (P2), and the output/input end rotation shaft (S1025) at the other end of the second rotary kinetic power source (P2) is combined with the rotation shaft (S1026);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing between the rotation shaft (S101) and the rotation shaft (S102) are enabled to be controlled, so as to further control the operation relation between the first rotary kinetic power source (P1), the second rotary kinetic power source (P2) and the rotation shaft (S1026); for example controlling one or both of the first rotary kinetic power source (P1) and the second rotary kinetic power source (P2) to drive the rotation shaft (S1026).

28. A clutch device structured with controllable epicycle gear set and the applied power train thereof as claimed in claim 26, wherein it is further structured by that a third rotary kinetic power source (P3) is installed between the first rotary kinetic power source (P1) and the controllable brake device (BK101), and in which:
--First rotary kinetic power source (P1);
--Second rotary kinetic power source (P2);
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Epicycle gear set (EG101);
--Controllable brake device (BK101);
--The other end of the rotation shaft (S101) combined with the input wheel (W101) of the epicycle gear set (EG101) is combined to the output/input end rotation shaft (S1051) of the third rotary kinetic power source (P3);
--The rotation shaft (S102) combined with the output wheel (W102) of the epicycle gear set (EG101) is combined with the output/input end rotation shaft (S1024) of the second rotary kinetic power source (P2), and the output/input end rotation shaft (S1025) at the other end of the second rotary kinetic power source (P2) is combined with the rotation shaft (S1026) for being served as an output/input end;
--The output/input end rotation shaft (S1011) of the first rotary kinetic power source (P1) is combined with the output/input end rotation shaft (S1052) of the third rotary kinetic power source (P3), and the other output/input end rotation shaft (S1051) of the third rotary kinetic power source (P3) is combined with the rotation shaft (S101) combined with the input wheel (W101) of the epicycle gear set (EG101);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing functions between the rotation shaft (S101) and the rotation shaft (S102) are enabled to be controlled, so as to further control the operation relation between the first rotary kinetic power source (P1), the second rotary kinetic power source (P2), the third rotary kinetic power source (P3) and the rotation shaft (S1026); for example controlling one or both of the first rotary kinetic power source (P1) and the second rotary kinetic power source (P2) to drive the rotation shaft (S1026), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

29. A clutch device structured with controllable epicycle gear set and the applied power train thereof as claimed in claim 27, wherein it is further structured by that a third rotary kinetic power source (P3) is installed between the first transmission device (T1) and the controllable brake device (BK101), and in which:
--First rotary kinetic power source (P1);
--Second rotary kinetic power source (P2);
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Epicycle gear set (EG101);
--Controllable brake device (BK101);
first transmission device (T1);
--The other end of the rotation shaft (S101) combined with the input wheel (W101) of the epicycle gear set (EG101) is combined to the output/input end rotation shaft (S1051) of the third rotary kinetic power source (P3), the other output/input end rotation shaft (S1052) of the third rotary kinetic power source (P3) is combined with the output/input end rotation shaft (S1012) of the first transmission device (T1), and the other output/input end rotation shaft (S1013) of the first transmission device (T1) is combined with the output/input end rotation shaft (S1011) of the first rotary kinetic power source (P1);
--The rotation shaft (S102) combined with the output wheel (W102) of the epicycle gear set (EG101) is combined with the output/input end rotation shaft (S1024) of the second rotary kinetic power source (P2), and the other output/input end rotation shaft (S1025) of the second rotary kinetic power source (P2) is combined with the rotation shaft (S1026) for being served as the output/input end;
--The output/input end rotation shaft (S1011) of the first rotary kinetic power source (P1) is combined with the output/input end rotation shaft (S1013) of the first transmission device (T1), the other output/input end rotation shaft (S1012) of the first transmission device (T1) is combined with the output/input end rotation shaft (S1052) of the third rotary kinetic power source (P3), and the other output/input end rotation shaft (S1051) of the third rotary kinetic power source (P3) is combined with rotation shaft (S101) combined with the input wheel (W101) of the epicycle gear set (EG101);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) or the rocker arm (A101) is combined to an action side of the controllable brake device (BK101), the other action side of the controllable brake device (BK101) is fixed in a housing (H100), and through controlling the controllable brake device (BK101) to perform brake locking or releasing, the operations of connecting for transmission or releasing functions between the rotation shaft (S101) and the rotation shaft (S102) are enabled to be controlled, so as to further control the operation relation between the first rotary kinetic power source (P1), the second rotary kinetic power source (P2), the third rotary kinetic power source (P3) and the rotation shaft (S1026); for example controlling one or both of the first rotary kinetic power source (P1) and the second rotary kinetic power source (P2) to drive the rotation shaft (S1026), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

30. A clutch device structured with controllable epicycle gear set and the applied power train thereof as claimed in claim 26, wherein it is further structured by the first rotary kinetic power source (P1) and a transmission unit (T200) and the epicycle gear set (EG101) and a controllable brake device (BK102), and the output wheel (W102) of the epicycle gear set (EG101) and the output/input end of the rotation shaft (S102) are combined with the second rotary kinetic power source (P2), the epicycle wheel (W103) of the epicycle gear set (EG101) is provided for driving the rocker arm (A101) and the sleeve type rotation shaft (AS101), and the sleeve type rotation shaft (AS101) is provided for driving the output/input end rotation shaft (S1031) of the transmission unit (T200), and the other output/input end rotation shaft (S1032) of the transmission unit (T200) is installed with a rotation shaft (S110), which mainly consists of:
--First rotary kinetic power source (P1): constituted by one or more than of one of rotary kinetic power sources capable of generating the rotary kinetic power output, including an internal combustion engine, external combustion engine, Sterling engine, turbine engine, wind-driven blade power set, flow-driven power set, or manual power;
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined with the controllable brake device (BK102) and combined with the second rotary kinetic power source (P2), and the epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), and the sleeve type rotation shaft (AS101) is provided for driving the output/input end rotation shaft (S1031) of the transmission unit (T200), the other output/input end rotation shaft (S1032) of the transmission unit (T200) is provided for driving the output/input end rotation shaft (S110);
--Through controlling the controllable brake device (BK102) to perform brake locking or releasing, the operations of connecting for transmission or releasing functions between the rotation shaft (S101) and the sleeve type rotation shaft (AS101) are enabled to be controlled, so as to further control the operation relation between the first rotary kinetic power source (P1), the second rotary kinetic power source (P2) and the rotation shaft (S110); for example controlling one or both of the first rotary kinetic power source (P1) and the second rotary kinetic power source (P2) to drive the rotation shaft (S110).

31. A clutch device structured with controllable epicycle gear set and the applied power train thereof as claimed in claim 30, wherein it is further structured by that the input wheel (W101) of the epicycle gear set (EG101) is combined with the rotation shaft (S101) and combined with the rotation shaft (S1011) of the first rotary kinetic power source (P1), the rotation shaft (S101) is combined to an action side of a controllable brake device (BK103), and the other action end of the controllable brake device (BK103) is fixed in the housing (H100), a planetary gear set (300) is installed between the rotation shaft (S102) combined with the output wheel (W102) of the epicycle gear set (EG101) and the second rotary kinetic power source (P2), the output/input end of the rotation shaft (S102) combined with the output wheel (W102) of the epicycle gear set (EG101) is combined with a rocker arm (A111) of a planetary gear set (T300), an outer annular wheel (W113) of the planetary gear set (T300) is fixed in the housing (H100), a sun wheel (W111) of the planetary gear set (T300) is combined with the second rotary kinetic power source (P2), the epicycle wheel (W103) of the epicycle gear set (EG101) is provided for driving the rocker arm (A101) and the sleeve type rotation shaft (AS101), and the sleeve type rotation shaft (AS101) is provided for driving the output/input end rotation shaft (S1031) of the transmission unit (T200), and in which:
--First rotary kinetic power source (P1);
--Second rotary kinetic power source (P2);
--Epicycle gear set (EG101);
--Controllable brake device (BK102);
--Controllable brake device (BK103);
--Transmission unit (T200);
-- Planetary gear set (T300): constituted by a sun wheel (W111), a planetary wheel (W112), an outer annular wheel (W113) composed of friction wheels or gears, and a shell fixed in the housing (H100), wherein the outer annular wheel (W113) is fixed in the shell then fixed in the housing or directly fixed in the housing, the planetary wheel (W112) is combined with the rocker arm (A111) and combined with the rotation shaft (S102), and the sun wheel (W111) is combined with the output/input end rotation shaft (S1024) of the second rotary kinetic power source (P2);
--The output/input end rotation shaft (S102) combined with the output wheel (W102) of the epicycle gear set (EG101) is combined to an action side of the controllable brake device (BK102), the other action side of the controllable brake device (BK102) is fixed in the housing (H100), and the other end of the rotation shaft (S102) is combined with the rocker arm (A111) driven by the planetary wheel (W112) of the planetary gear set (T300);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101) and is provided for driving the output/input end rotation shaft (S1031) of the transmission unit (T200), and the other output/input end rotation shaft (S1032) of the transmission unit (T200) is provided for driving the rotation shaft (S110);
--The output/input end rotation shaft (S1011) of the first rotary kinetic power source (P1) is combined with the rotation shaft (S101), the rotation shaft (S101) is combined with the input wheel (W101) of the epicycle gear set (EG101), as well as connected to an action side of the controllable brake device (BK103), and the other action side of the controllable brake device (BK103) is fixed in the housing (H100);
--Through controlling one or both of the controllable brake device (BK102) and the controllable brake device (BK103) to perform brake locking or releasing, the operation relation between the first rotary kinetic power source (P1), the second rotary kinetic power source (P2) and the rotation shaft (S110) is enabled to be controlled; for example controlling the operations of connecting for transmission or releasing functions between the rotation shaft (S101) and the sleeve type rotation shaft (AS101) or between the rotation shaft (S102) and the sleeve type rotation shaft (AS101), one or both of the first rotary kinetic power source (P1) and the second rotary kinetic power source (P2) is further controlled to drive the rotation shaft (S110).

32. A clutch device structured with controllable epicycle gear set and the applied power train thereof as claimed in claim 30, wherein it is further structured by that the second rotary kinetic power source (P2) is installed at one end of the output/input end rotation shaft (S110) of the transmission unit (T200), and in which:
--First rotary kinetic power source (P1);
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Epicycle gear set (EG101);
--Controllable brake device (BK102);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S1025) of the second rotary kinetic power source (P2), and the other end of the rotation shaft (S110) is served as an output/input end;
--Through controlling the controllable brake device (BK102) to perform brake locking or releasing, the operations of connecting for transmission or releasing between the rotation shaft (S101) and the sleeve type rotation shaft (AS101) are enabled to be controlled, so as to further control the operation relation between the first rotary kinetic power source (P1), the second rotary kinetic power source (P2) and the rotation shaft (S110); for example controlling one or both of the first rotary kinetic power source (P1) and the second rotary kinetic power source (P2) to drive the rotation shaft (S110).

33. A clutch device structured with controllable epicycle gear set and the applied power train thereof as claimed in claim 32, wherein it is further structured by that an epicycle gear set (EG201) and a controllable brake device (BK104) are installed between one end of the output/input end rotation shaft (S110) of the transmission unit (T200) and the second rotary kinetic power source (P2), and in which:
--First rotary kinetic power source (P1);
--Second rotary kinetic power source (P2);
--Epicycle gear set (EG101);
-- Epicycle gear set (EG201): constituted by an input wheel (W201) and an output wheel (W202) and at least an epicycle wheel (W203), and including through bevel gears engaging with each other, or through bevel friction wheels mutually performing friction transmissions to form an epicycle gear set function, and structured by the rotation shaft (S201), the rotation shaft (S202), the rocker arm (A201), the sleeve type rotation shaft (AS201) and a bearing, and installed with a shell for being combined with the housing (H100);
--Controllable brake device (BK102);
-- Controllable brake device (BK104): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS201) or the rocker arm (A201), and the other action side is fixed in the housing (H100);
--Transmission unit (T200): constituted by the automatic, manumatic, semi-automatic, or manual gear shifting device with fixed or variable speed ratios which is further structured by a transmission gear set composed of gears, friction wheels, pulleys and pulley belts, chains and chain wheels, or a planetary type transmission gear set, or an epicycle type transmission gear set, the CVT, or the hydraulic transmission device;
--One end of the rotation shaft (S101) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S202) combined with the output wheel (W202) of the epicycle gear set (EG201), the other output/input end rotation shaft (S201) combined with the input wheel (W201) of the epicycle gear set (EG201) is combined with the output/input end rotation shaft (S1025) of the second rotary kinetic power source (P2), and the epicycle wheel (W203) of the epicycle gear set (EG201) is provided for driving the rocker arm (A201) and the sleeve type rotation shaft (AS201), the sleeve type rotate shaft (AS201) is capable of rotating on the rotation shaft (S201) and is provided for connecting to an action side of the controllable brake device (BK104), the other action side of the controllable brake device (BK104) is fixed in the housing (H100), and the other end of the rotation shaft (S110) is served as an output/input end;
--Through controlling one or both of the controllable brake device (BK102) and the controllable brake device (BK104) to perform brake locking or releasing, the operation relation between the first rotary kinetic power source (P1), the second rotary kinetic power source (P2) and the rotation shaft (S110) is enabled to be controlled; for example controlling the operations of connecting for transmission or releasing functions between the rotation shaft (S101) and the sleeve type rotation shaft (AS101) or between the rotation shaft (S201) and the rotation shaft (S202), one or both of the first rotary kinetic power source (P1) and the second rotary kinetic power source (P2) is controlled to drive the rotation shaft (S110).

34. A clutch device structured with controllable epicycle gear set and the applied power train thereof as claimed in claim 32, wherein it is further structured by that the third rotary kinetic power source (P3) is installed between the first rotary kinetic power source (P1) and the rotation shaft (S101) combined with the input wheel (W101) of the epicycle gear set (EG101), and in which:
--First rotary kinetic power source (P1);
--Second rotary kinetic power source (P2);
--Third rotary kinetic power source (P3): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
-- Epicycle gear set (EG101): constituted by an input wheel (W101) and an output wheel (W102) and at least an epicycle wheel (W103), and including through bevel gears engaging with each other, or through bevel friction wheels mutually performing friction transmissions to form an epicycle gear set function, and structured by the rotation shaft (S101), the rotation shaft (S102), the rocker arm (A101), the sleeve type rotation shaft (AS101) and a bearing, and installed with a shell for being combined with the housing (H100);
--Controllable brake device (BK102);
--Transmission unit (T200);
--One end of the rotation shaft (S101) is combined with the output/input end rotation shaft (S1051) of the third rotary kinetic power source (P3), the rotation shaft (S1052) at the other end of the third rotary kinetic power source (P3) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S1025) of the second rotary kinetic power source (P2), and the other end of the rotation shaft (S110) is served as an output/input end;
--The rotation shaft (S101) combined with the input wheel (W101) of the epicycle gear set (EG101) is combined with the output/input end rotation shaft (S1051) of the third rotary kinetic power source (P3), and the other output/input end rotation shaft (S1052) of the third rotary kinetic power source (P3) is combined with the output/input end rotation shaft (S1011) of the first rotary kinetic power source (P1);
--Through controlling the controllable brake device (BK102) to perform brake locking or releasing, the operations of connecting for transmission or releasing functions between the rotation shaft (S101) and the sleeve type rotation shaft (AS101) are enabled to be controlled, so as to further control the operation relation between the first rotary kinetic power source (P1), the second rotary kinetic power source (P2), the third rotary kinetic power source (P3) and the rotation shaft (S110); for example controlling one or both of the first rotary kinetic power source (P1) and the second rotary kinetic power source (P2) to drive the rotation shaft (S110), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).

35. A clutch device structured with controllable epicycle gear set and the applied power train thereof as claimed in claim 34, wherein it is further structured by that the epicycle gear set (EG201) and the controllable brake device (BK104) are installed between one end of the output/input end rotation shaft (S110) of the transmission unit (T200) and the second rotary kinetic power source (P2), and in which:
--First rotary kinetic power source (P1);
--Second rotary kinetic power source (P2): constituted by a rotational electric machine, or constituted by a rotational electric machine combined with a transmission unit, mainly having the motor function for converting the input electric power into the rotary mechanical kinetic energy, as well as having the power generator function for reversely inputting rotary kinetic energy;
--Third rotary kinetic power source (P3);
--Epicycle gear set (EG101);
-- Epicycle gear set (EG201): constituted by an input wheel (W201) and an output wheel (W202) and at least an epicycle wheel (W203), and including through bevel gears engaging with each other, or through bevel friction wheels mutually performing friction transmissions to form an epicycle gear set function, and structured by the rotation shaft (S201), the rotation shaft (S202), the rocker arm (A201), the sleeve type rotation shaft (AS201) and a bearing, and installed with a shell for being combined with the housing (H100);
--Controllable brake device (BK102);
-- Controllable brake device (BK104): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS201) or the rocker arm (A201), and the other action side is fixed in the housing (H100);
--Transmission unit (T200);
--One end of the rotation shaft (S101) is combined with the output/input end rotation shaft (S1051) of the third rotary kinetic power source (P3), the rotation shaft (S1052) at the other end of the third rotary kinetic power source (P3) is combined with the output/input end rotation shaft (S1011) of the first rotary kinetic power source (P1), the other end of the rotation shaft (S101) is combined with the input wheel (W101) of the epicycle gear set (EG101), the output/input end rotation shaft (S102) combined with the output wheel (W102) of the epicycle gear set (EG101) is combined to an action side of the controllable brake device (BK102), and the other action side of the controllable brake device (BK102) is fixed in the housing (H100);
--The epicycle wheel (W103) of the epicycle gear set (EG101) is combined with the rocker arm (A101) and combined with the sleeve type rotation shaft (AS101), the sleeve type rotation shaft (AS101) rotates on the rotation shaft (S101), the sleeve type rotation shaft (AS101) is provided for driving the output/input end rotation shaft (S1031) of the transmission unit (T200), and the other output/input end rotation shaft (S1032) of the transmission unit (T200) is provided for driving the output/input end rotation shaft (S110);
--One end of the rotation shaft (S110) is combined with the output/input end rotation shaft (S202) combined with the output wheel (W202) of the epicycle gear set (EG201), the other output/input end rotation shaft (S201) combined with the input wheel (W201) of the epicycle gear set (EG201) is combined with the output/input end rotation shaft (S1025) of the second rotary kinetic power source (P2), and the epicycle wheel (W203) of the epicycle gear set (EG201) is provided for driving the rocker arm (A201) and the sleeve type rotation shaft (AS201), the sleeve type rotate shaft (AS201) is capable of rotating on the rotation shaft (S201) and is provided being combined to an action side of the controllable brake device (BK104), the other action side of the controllable brake device (BK104) is fixed in the housing (H100), and the other end of the rotation shaft (S110) is served as an output/input end;
--The rotation shaft (S101) combined with the input wheel (W101) of the epicycle gear set (EG101) is combined with the output/input end rotation shaft (S1051) of the third rotary kinetic power source (P3), and the other output/input end rotation shaft (S1052) of the third rotary kinetic power source (P3) is combined with the output/input end rotation shaft (S1011) of the first rotary kinetic power source (P1);
--Through controlling one or both of the controllable brake device (BK102) and the controllable brake device (BK104) to perform brake locking or releasing, the operation relation between the first rotary kinetic power source (P1), the second rotary kinetic power source (P2), the third rotary kinetic power source (P3) and the rotation shaft (S110) are able to be controlled; for example controlling the operations of connecting for transmission or releasing functions between the rotation shaft (S101) and the sleeve type rotation shaft (AS101) or between the rotation shaft (S201) and the rotation shaft (S202), one or both of the first rotary kinetic power source (P1) and the second rotary kinetic power source (P2) is controlled to drive the rotation shaft (S110), or the first rotary kinetic power source (P1) drives the third rotary kinetic power source (P3) to operate as the power generator function, or the third rotary kinetic power source (P3) is operated as the motor function to actuate and drive the first rotary kinetic power source (P1).
